# EUROPÄISCHE PATENTSCHRIFT

(11) **EP 4 467 041 B1**
(45) Veröffentlichungstag und Bekanntmachung des Hinweises auf die Patenterteilung: **10.06.2026**
(21) Anmeldenummer: 23175359.1
(22) Anmeldetag: 25.05.2023
(51) Int. Cl.: A47J 36/32

(54) **AUFNAHMEGEFÄSS FÜR EIN KÜCHENGERÄT, KÜCHENGERÄT UND VERFAHREN ZUM BETREIBEN EINES KÜCHENGERÄTS**
RECEPTACLE FOR A KITCHEN APPLIANCE, KITCHEN APPLIANCE AND METHOD FOR OPERATING A KITCHEN APPLIANCE
RÉCIPIENT DE RÉCEPTION POUR UN APPAREIL DE CUISINE, APPAREIL DE CUISINE ET PROCÉDÉ DE FONCTIONNEMENT D'UN APPAREIL DE CUISINE

(43) Veröffentlichungstag der Anmeldung: 27.11.2024
(73) Patentinhaber: Vorwerk & Co. Interholding GmbH, 42275 Wuppertal (DE)
(72) Erfinder: Dr. Beckmann, Nils, 42853 Remscheid (DE); Wahle, Volker, 46499 Hamminkeln (DE)
(74) Vertreter: Cohausz & Florack

(56) Entgegenhaltungen:
- EP-A1- 3 056 882
- EP-A1- 3 841 926
- WO-A1-2021/038528
- US-A1- 2004 100 862

## Beschreibung

Die vorliegende Erfindung betrifft ein Aufnahmegefäß für ein Küchengerät mit einer einen Aufnahmeraum bildenden Wandung und mit einem an der Wandung angebrachten Bauteil. Die vorliegende Erfindung betrifft weiter ein Küchengerät mit einem solchen Aufnahmegefäß und mit einem Grundgerät, sowie ein Verfahren zum Betreiben eines derartigen Küchengeräts.

Moderne Küchengeräte werden häufiger mit einer Vielfalt an Zubehörteilen geliefert, die für eine verbesserte Unterstützung des Nutzers bei unterschiedlichen Lebensmittelzubereitungsvorgängen bestimmt sind. Diese Zubehörteile mögen zwar verhelfen, die Zubereitungsergebnisse qualitativ zu steigern, allerdings erhöht deren Anzahl die Komplexität der Küchengerätnutzung bei dem Nutzer. Aus dem Stand der Technik ist bereits bekannt, Zubehörteile durch das Küchengerät selbst automatisch erkennen zu lassen, beispielsweise durch entsprechend gestaltete Sensorik am Grundgerät.

Um ein möglichst breites Anwendungsfeld anzubieten, werden Aufnahmegefäße für Küchengeräte in der Regel mit einer Materialzusammensetzung vorgesehen, die bei kochenden bis gefrorenen Lebensmitteln temperaturbeständig ist. Außerdem ist meistens erwünscht, dass das Aufnahmegefäß auch spülmaschinenfest ist. So sind Aufnahmegefäße aus Edelstahl oder zumindest mit einem relativ hohen Anteil an Metall auf dem Markt verfügbar. Es hat sich herausgestellt, dass das Material des Aufnahmegefäßes eine automatische Zubehörteilerkennung durch Technologien wie zum Beispiel RFID (Radio Frequency Identification) oder NFC (Near Field Communication) hindern oder zumindest stören kann.

Um dies zu umgehen, wird im Stand der Technik eine Zubehörteilerkennung durch Schließen von elektrischen Kontakten vorgeschlagen, was allerdings den Nachteil von offenen elektrischen Kontaktflächen mit sich bringt.

Die WO 2021 /038528 A1 offenbart einen Grill mit abschirmender Metallwandung und einem in der Wandung durchdringenden Repeater. Die EP 3 841 926 A1 betrifft ein Funktionselement für ein Küchengerät aufweisend einen Funktionsbereich für eine Funktion für das Küchengerät, und eine Brückeneinheit zum Überwinden eines ein Zubehörteil des Küchengerätes von einer Steuereinheit des Küchengerätes abschirmenden Schirmraumes des Küchengerätes für eine drahtlose Datenkommunikation zwischen dem Zubehörteil und der Steuereinheit. Ferner betrifft die Erfindung ein Küchengerät.

Vor diesem Hintergrund liegt der vorliegenden Erfindung die Aufgabe zu Grunde, ein Aufnahmegefäß, ein Küchengerät und ein Verfahren mit gesteigerter Nutzerfreundlichkeit zur Verfügung zu stellen. Insbesondere liegt der vorliegenden Erfindung die Aufgabe zu Grunde, die Zubehörteilerkennung bei Küchengeräten zu verbessern.

Die zuvor genannte Aufgabe wird erfindungsgemäß mit einem Aufnahmegefäß für ein Küchengerät mit einer einen Aufnahmeraum bildenden Wandung und mit einem an der Wandung angebrachten Bauteil dadurch gelöst, dass eine erste Antennenvorrichtung zur kabellosen Kommunikation am Bauteil angeordnet ist, dass eine zweite Antennenvorrichtung zur kabellosen Kommunikation am Bauteil angeordnet ist, dass ein erstes Anpassungsnetzwerk am Bauteil angeordnet ist, wobei das erste Anpassungsnetzwerk mit der ersten Antennenvorrichtung und mit der zweiten Antennenvorrichtung verbunden ist, und wobei das Anpassungsnetzwerk zur Anpassung von Eigenschaften der ersten Antennenvorrichtung und / oder der zweiten Antennenvorrichtung zum Übermitteln eines Signals eingerichtet ist.

Mit diesem Aufnahmegefäß kann die Hürde, die eine für elektromagnetische Wellen abschirmende Materialzusammensetzung der Wandung darstellt, überwunden werden, indem eine für zum Beispiel eine automatische Zubehörteilerkennung erforderliche Signalübertragung durch das Bauteil bzw. durch den Griff des Aufnahmegefäßes erfolgt. Mit anderen Worten weist das erfindungsgemäße Aufnahmegefäß Mittel auf, die eine Umleitung des Signals um die abschirmende Wandung herum über den Griff ermöglichen. Außerdem können durch Vorsehen des Anpassungsnetzwerk unterschiedliche Antennenelemente in der ersten Antennenvorrichtung und in der zweiten Antennenvorrichtung verbaut werden, wobei diese trotz unterschiedlicher Eigenschaften Signale miteinander austauschen können.

Ferner kann durch die Ausbildung der Antennenvorrichtungen zur kabellosen Kommunikation mit beispielsweise einem Kommunikationsmodul eines Küchengeräts die Robustheit des Aufnahmegefäßes gegenüber Flüssigkeiten und äußeren Einflüssen erhöht werden. Dementsprechend wird die Nutzerfreundlichkeit des Aufnahmegefäßes, insbesondere bei Lebensmittelzubereitungsvorgängen und auch bei Reinigungsvorgängen verbessert.

Die zuvor genannte Aufgabe wird erfindungsgemäß weiterhin mit einem Küchengerät mit einem Grundgerät und mit einem Aufnahmegefäß, insbesondere mit einem zuvor beschriebenen Aufnahmegefäß, wobei das Aufnahmegefäß eine Wandung und ein Bauteil aufweist, dadurch gelöst, dass ein erstes Kommunikationsmodul am Grundgerät vorgesehen ist, dass eine erste Antennenvorrichtung und eine zweite Antennenvorrichtung am Bauteil des Aufnahmegefäßes angeordnet sind, wobei die erste Antennenvorrichtung und die zweite Antennenvorrichtung kabelverbunden sind, und dass das erste Kommunikationsmodul des Grundgeräts und die erste Antennenvorrichtung des Aufnahmegefäßes zur kabellosen Kommunikation miteinander eingerichtet sind.

Dementsprechend kann mit der zweiten Antennenvorrichtung ein Signal, beispielsweise von einem Zubehörteil oder einem Smartphone kabellos an einer Position erfasst oder empfangen werden, die außerhalb der Reichweite des Grundgeräts liegt, und dann das Signal sicher und einfach, beispielsweise per Kabelverbindung an die erste, in Erfassungsreichweite des Grundgeräts angeordnete Antennenvorrichtung übertragen werden. Anschließend kann das Signal durch die zweite Antennenvorrichtung kabellos an das Kommunikationsmodul des Grundgeräts weiter übertragen werden.

Die zuvor genannte Aufgabe wird erfindungsgemäß weiterhin gelöst durch ein Verfahren zum Betreiben eines Küchengeräts, insbesondere eines zuvor beschriebenen Küchengeräts, bei dem ein Grundgerät mit einem ersten, zur kabellosen Kommunikation eingerichteten Kommunikationsmodul bereitgestellt wird, bei dem ein Aufnahmegefäß mit einem Bauteil, mit einer ersten Antennenvorrichtung, mit einer zweiten Antennenvorrichtung und mit einem Anpassungsnetzwerk bereitgestellt wird, wobei die erste Antennenvorrichtung, die zweite Antennenvorrichtung und das Anpassungsnetzwerk am Bauteil angeordnet sind, bei dem das erste Kommunikationsmodul des Grundgeräts und die erste Antennenvorrichtung des Aufnahmegefäßes in gegenseitiger Reichweite angeordnet werden, bei dem ein Signal durch die zweite Antennenvorrichtung empfangen und an das Anpassungsnetzwerk weitergeleitet wird, bei dem Eigenschaften des Signals durch das Anpassungsnetzwerk an die Eigenschaften der ersten Antennenvorrichtung angepasst werden, und bei dem das Signal mit angepassten Eigenschaften durch die erste Antennenvorrichtung an das erste Kommunikationsmodul des Grundgeräts kabellos übertragen wird.

Mit dem Verfahren werden dieselben Vorteile erreicht, wie mit dem Aufnahmegefäß und mit dem Küchengerät.

Ein Grundgerät im Sinne der vorliegenden Erfindung ist vorzugsweise als Basis für den Einsatz von einem Aufnahmegefäß und von mindestens einem Zubehörteil ausgestaltet. Das Grundgerät weist ein Gehäuse auf, in dem ein Elektromotor zum Antrieb von Zubehörteilen angeordnet ist.

Das Aufnahmegefäß weist eine Wandung auf, die einen Aufnahmeraum zur Aufnahme von Lebensmitteln zumindest teilweise umgibt. Vorzugsweise umfasst die Wandung einen Boden und Wände, die einstückig oder eben mehrstückig bzw. als separate Teile ausgebildet sind. Des Weiteren kann die Wandung bzw. der Boden oder ein Doppelboden des Aufnahmegefäßes derart ausgebildet sein, dass er eine Schnittstelle zur mechanischen Verbindung mit dem Gehäuse des Grundgeräts bildet. Außerdem kann am Boden des Aufnahmegefäßes eine Heizung zum Erwärmen von durch das Aufnahmegefäß aufgenommenen Lebensmitteln vorgesehen sein.

Als Zubehörteil wird jedes für ein Zusammenwirken mit dem Grundgerät ausgebildetes Teil verstanden. Der Begriff "Zusammenwirken" umfasst, unter anderem, die Handlungen aus der Liste: Verbinden, Koppeln, Montieren, Aufsetzen, Anbringen, Aufbringen und Ähnliches. Insbesondere ist ein Zubehörteil zur Erweiterung der Funktion des Grundgeräts ausgebildet, zum Beispiel als Schneide-, Rühr-, Koch-, Wiege-, Gar-, Dampf- oder Abdeckungseinheit.

An der Wandung ist ein Bauteil angebracht. Das Bauteil kann beispielsweise als Handhabungsteil in Form eines oder mehrerer Griffe, als Element zur thermischen und / oder elektrischen Isolierung des Aufnahmegefäßes, als Umhüllung des Aufnahmegefäßes, oder als Zusatzbauteil ohne weitere besondere Funktion ausgebildet sein. Das Bauteil kann alternativ oder zusätzlich mit der Wandung des Aufnahmegefäßes abnehmbar verbunden sind, beispielsweise durch ein Magnet-, Klemm- oder Einrastelement. Dadurch lässt sich das Aufnahmegefäß einfach abmontieren, zum Beispiel zu Reinigungszwecken. Alternativ kann das Bauteil mit der Wandung des Aufnahmegefäßes fest verbunden sein, um so die Robustheit des Aufnahmegefäßes zu steigern.

Darüber hinaus können die erste Antennenvorrichtung und die zweite Antennenvorrichtung in dem Bauteil integriert sein. Dadurch werden die Antennenvorrichtungen von äußeren Einflüssen, wie bei einem Reinigungsvorgang oder mechanischen Beanspruchungen geschützt.

Das Bauteil in Form eines Handhabungsteils ist vorzugsweise dazu bestimmt, ein Greifen des Aufnahmegefäßes zu vereinfachen. Ein Beispiel für ein Handhabungsteil ist ein Griff, der mit der Wandung des Aufnahmegefäßes verbunden ist. Dabei kann das Handhabungsteil aus einem thermisch isolierenden Material ausgebildet sein, um Verbrennungsgefahren bei einem Nutzer oder einer Küchenarbeitsfläche zu verringern.

Es sind eine erste Antennenvorrichtung und eine zweite Antennenvorrichtung am Bauteil des Aufnahmegefäßes vorgesehen. Beide Antennenvorrichtungen sind vorzugsweise über eine Kabelverbindung, beispielsweise via das erste Anpassungsnetzwerk, miteinander verbunden und jeweils zur kabellosen Kommunikation mit anderweitigen Kommunikationsmodulen oder - mitteln eingerichtet. So ist beispielsweise die erste Antennenvorrichtung des Aufnahmegefäßes im Kontext des Küchengeräts dazu eingerichtet, mit dem ersten Kommunikationsmodul des Grundgeräts kabellos zu kommunizieren.

Eine Antennenvorrichtung im Sinne der vorliegenden Offenbarung weist vorzugsweise mindestens ein Antennenelement auf, das passiv oder aktiv ausgebildet sein kann. Zusätzlich kann eine Antennenvorrichtung im Sinne der vorliegenden Offenbarung ein Transceiver, ein Transmitter und oder weitere elektronische Bauteile aufweisen, die zur Signalverarbeitung, -umwandlung, -übertragung, -anpassung und/oder -auswertung eingerichtet sind. Der Transceiver ist vorzugsweise dazu ausgebildet, mindestens eine Information aus einem durch das Antennenelement empfangenen, modulierten Signal zu extrahierten.

Weiterhin ist das Aufnahmegefäß vorzugsweise derart ausgebildet, dass ein Signal parallel, insbesondere nahezu zeitgleich, an der ersten Antennenvorrichtung und an der zweiten Antennenvorrichtung angelegt werden kann. Dies bietet einer dritten Antennenvorrichtung mit einem Transceiver, beispielsweise eines für das Aufnahmegefäß vorgesehenen Abdeckungselements, die Möglichkeit, das Signal an einer vom Aufnahmegefäß räumlich entfernten Position auszuwerten.

Vorliegend wird unter dem Begriff "Kommunikation" ein Transfer von Signalen verstanden, die Träger von Informationsdaten sein können. Derartige Informationen können beispielsweise ein Zustand eines Zubehörteils, ein Zustand eines Lebensmittels, eine Uhrzeit, eine Angabe über einen Zubereitungsparameter, eine Nutzerangabe, ein Messwert aus einem Sensor oder weiteres sein, wobei diese Liste nicht abschließend ist. Daneben können Signale, die kommuniziert werden, Träger von Energie sein, die beispielsweise zur Stromversorgung von elektronischen Bauteilen verwendet werden kann.

Das Grundgerät weist ein erstes, zur kabellosen Kommunikation eingerichtetes Kommunikationsmodul auf und das Aufnahmegefäß weist eine erste, zur kabellosen Kommunikation eingerichtete Antennenvorrichtung auf. Das erste Kommunikationsmodul und die erste Antennenvorrichtung sind dazu eingerichtet, miteinander zu kommunizieren bzw. miteinander Signale kabellos auszutauschen. Hierzu kann das erste Kommunikationsmodul ein Antennenelement und einen Transceiver aufweisen, die in Zusammenwirkung dazu eingerichtet sind, einerseits ein Anregungssignal, beispielsweise ein hochfrequentes elektromagnetisches Wechselfeld, zu emittieren, und andererseits ein moduliertes Antwortsignal zu empfangen und auszuwerten. Die erste Antennenvorrichtung weist ein erstes Antennenelement auf und ist vorzugsweise dazu eingerichtet, ein Anregungssignal des ersten Kommunikationsmoduls des Grundgeräts zu empfangen, zu modulieren und als moduliertes Antwortsignals auszugeben. Derart kann ein Signal, das Träger von Informationen ist, kabellos, insbesondere kontaktlos zwischen dem Grundgerät und dem Aufnahmegefäß übertragen werden.

Am Aufnahmegefäß, insbesondere am Bauteil des Aufnahmegefäßes ist mindestens ein Anpassungsnetzwerk vorgesehen, das zur Anpassung von Eigenschaften eines durch das erste Antennenelement empfangenen Signals an die Eigenschaften des zweiten Antennenelements eingerichtet ist. Zusätzlich oder alternativ kann das Anpassungsnetzwerk zur Anpassung von Eigenschaften eines durch das zweite Antennenelement empfangenen Signals an die Eigenschaften des ersten Antennenelements eingerichtet sein. Das Anpassungsnetzwerk kann zum Beispiel Kondensatoren, Spulen und/oder Widerstände aufweisen und derart konfiguriert sein, dass für ein Antennenelement der ersten Antennenvorrichtung oder der zweiten Antennenvorrichtung eine (geeignete) Gesamtimpedanz gebildet wird.

Vorzugsweise weisen die Kommunikationspartner, beispielsweise die erste Antennenvorrichtung, die zweite Antennenvorrichtung und das erste Kommunikationsmodul jeweils ein Anpassungsnetzwerk auf. Dadurch können Signale bzw. Eigenschaften von Signalen durch die jeweiligen Anpassungsnetzwerke an die Eigenschaften von unterschiedlich ausgebildeten Kommunikationspartnern bzw. Antennenelementen angepasst werden. Somit können Unterschiede zwischen Antennenelementen ausgeglichen, um eine Übertragung von den so angepassten Signalen zu ermöglichen. Zusätzlich können die einzelnen Anpassungsnetzwerke dazu eingerichtet sein, die Eigenschaften von einem Signal an Anforderungen von nachgeschalteten Verarbeitungselementen bzw. Elektronikbauteilen anzupassen, beispielsweise zur späteren Auswertung der Signale in Messwerten oder zur Erzeugung von Strom auf der Basis des Signals.

Ein Anpassungsnetzwerk gemäß der vorliegenden Offenbarung ist vorzugsweise dazu eingerichtet, Eigenschaften einer Antennenvorrichtung bzw. eines Antennenelements und / oder eines Signals statisch oder dynamisch anzupassen. Hierzu kann das erste Anpassungsnetzwerk und / oder weitere vorgesehenen Anpassungsnetzwerke elektronische Bauteile aufweisen, die insgesamt eine variable Kapazität und/oder Impedanz darstellen.

Im Folgenden werden verschiedene Ausführungsformen des Aufnahmegefäßes, des Küchengeräts und des Verfahrens beschrieben, wobei die einzelnen Ausführungsformen jeweils unabhängig voneinander für das Aufnahmegefäß, das Küchengerät und das Verfahren gelten. Darüber hinaus können die einzelnen Ausführungsformen beliebig miteinander kombiniert werden.

Bei einer Ausführungsform des Aufnahmegefäßes weist die erste Antennenvorrichtung einen Nahfeldkommunikation-Transceiver auf und die zweite Antennenvorrichtung weist einen passiven Nahfeldkommunikation-Transmitter auf.

Dadurch kann das Aufnahmegefäß mit bereits auf dem Markt verfügbaren Elementen realisiert werden, wobei diese Bauteile relativ kostengünstig sind. Außerdem bieten Nahfeldkommunikationselemente den Vorteil einer relativen geringen Reichweite des Erfassungsfelds, so dass eine Datenübertragung sicher und robust gewährleistet werden kann.

Alternativ oder zusätzlich kann die erste Antennenvorrichtung des Aufnahmegefäßes zur induktiven Energieübertragung eingerichtet sein oder auf einem proprietären Standard zur Stromversorgung basieren. Insbesondere kann die zweite Antennenvorrichtung zur kabellosen Kommunikation mit einem Nahfeldkommunikationselement oder mit einem induktiven Kommunikationselement eines Smartphones eingerichtet sein.

Ferner kann durch Ausbildung der Antennenvorrichtungen des Aufnahmegefäßes als Nahfeldkommunikation-Transceiver oder Nahfeldkommunikation-Transmitter eine bidirektionale Kommunikationsverbindung mit beispielsweise dem Grundgerät, mit Zubehörteilen und / oder mit weiteren Elementen wie ein Smartphone bewerkstelligt werden.

Bei einer Ausführungsform des Aufnahmegefäßes ist das erste Anpassungsnetzwerk zur Anpassung von Eigenschaften eines durch die zweite Antennenvorrichtung empfangenen Signals an die Eigenschaften der ersten Antennenvorrichtung eingerichtet.

Somit können sowohl Signalen von der ersten Antennenvorrichtung an die zweite Antennenvorrichtung als auch Signale in die umgekehrte Richtung, also von der zweiten Antennenvorrichtung zur ersten Antennenvorrichtung weitergeleitet werden.

Im Kontext des Küchengeräts ermöglicht ein derartiges Aufnahmegefäß eine bidirektionale Kommunikation zwischen Zubehörteil und Grundgerät. So können zum Beispiel Werte, die durch einen Sensor am Aufnahmegefäß erfasst worden sind, zentral am Grundgerät ausgewertet werden und für die gesamte Steuerung des Küchengeräts verwendet werden, wobei die Steuerung auch Funktionen umfasst, die mithilfe des Aufnahmegefäßes durchgeführt werden sollen.

Erfindungsgemäß sind ein zweites Anpassungsnetzwerk und ein Stromversorgungsteil vorgesehen, das zweite Anpassungsnetzwerk ist dazu eingerichtet, Eigenschaften eines durch das erste Antennenvorrichtung empfangenen Signals für eine Weiterbehandlung durch das Stromversorgungsteil einzustellen, und das Stromversorgungsteil ist dazu eingerichtet, aus dem durch das erste Antennenvorrichtung kabellos empfangenen Signal mit angepassten Eigenschaften Strom zu erzeugen.

Bei einer Ausführungsform des Aufnahmegefäßes ist das Stromversorgungsteil mit einem Mikroprozessor verbunden und zur Stromversorgung des Mikroprozessors eingerichtet. Alternativ oder zusätzlich ist das Stromversorgungsteil mit dem Transceiver verbunden und zur Stromversorgung des Transceivers eingerichtet.

Bei einer entsprechenden Ausführungsform des Verfahrens wird ein Signal vom ersten Kommunikationsmodul des Grundgeräts an die erste Antennenvorrichtung des Aufnahmegefäßes kabellos übertragen, Strom wird durch ein Stromversorgungsteil der ersten Antennenvorrichtung aus dem übertragenen Signal erzeugt, und ein Transceiver und / oder ein Mikroprozessor des Aufnahmegefäßes wird mit dem erzeugten Strom versorgt.

Diese Ausführungsformen des Aufnahmegefäßes und des Verfahrens bieten jeweils den Vorteil einer Stromversorgung sowohl zum Zwecke einer Datenkommunikation bzw. -auswertung. Hiermit können beispielsweise ein aktives Teil der ersten Antennenvorrichtung oder Sensoren, die am Aufnahmegefäß vorgesehen sind und mit dem Prozessor verbunden sind, mit Strom versorgt werden. Dadurch kann beim Aufnahmegefäß insgesamt auf elektrische Anschlüsse oder Kontakte sowie auch auf zusätzliche Energieversorgungsmittel wie Batterie oder Akkumulator verzichtet werden, und trotzdem die Nutzerfreundlichkeit durch Datenerhebung, -übertragung und -auswertung gesteigert werden.

Auf diese Art können elektronische Bauteile, die am Aufnahmegefäß angebracht sind, mit Strom versorgt werden und gleichzeitig auf eine Kabelverbindung für diese Stromversorgung zum Küchengerät verzichtet werden. Dementsprechend können das Aufnahmegefäß und auch das Küchengerät ohne Kabelanschluss oder elektrische Kontakte ausgebildet werden, was für eine Anwendung in Zusammenhang mit Lebensmitteln oder zur Reinigung des Aufnahmegefäßes bzw. des Küchengeräts vorteilhaft ist. Außerdem ermöglicht eine Stromversorgung bzw. der Einsatz von sogenannten aktiven Bauteilen eine generelle Erweiterung der möglichen Funktionen des Aufnahmegefäßes und des Küchengeräts.

Das Stromversorgungsteil kann beispielsweise einen Gleichrichter und einen Spannungsregler aufweisen.

Bei einer Ausführungsform des Aufnahmegefäßes sind ein Transceiver und ein Mikroprozessor vorgesehen, wobei der Transceiver mit dem zweiten Anpassungsnetzwerk und mit dem Mikroprozessor verbunden ist. Das zweite Anpassungsnetzwerk ist dazu eingerichtet, Eigenschaften eines durch die erste Antennenvorrichtung empfangenen Signals für eine Weiterbehandlung durch den Transceiver anzupassen, und der Transceiver ist dazu eingerichtet, das Signal zur Weiterbehandlung durch den Mikroprozessor anzupassen. Der Transceiver ist dazu eingerichtet, ein durch den Mikroprozessor ausgegebene Signal zur Weiterbehandlung durch den Transceiver anzupassen. Das zweite Anpassungsnetzwerk ist dazu eingerichtet, das durch den Mikroprozessor angepasste Signal des Mikroprozessors für ein Senden durch die ersten Antennenvorrichtung anzupassen.

Dadurch können Daten, die an der ersten Antennenvorrichtung empfangen worden sind, durch den Mikroprozessor verarbeitet werden, und / oder Daten, die durch den Mikroprozessor ausgegeben werden, dann durch die erste Antennenvorrichtung versendet werden, beispielweise an das Grundgerät.

Am Aufnahmegefäß können Sensoren vorgesehen sind, beispielsweise in Form eines Magnetsensors, Hallsensors, Temperatursensors oder weiteres ausgebildet sein. Mit einem Magnetsensor kann insbesondere ein Zubehörteilzustand, wie zum Beispiel ein Zubehörteiltyp mittels einer Erkennung der Magnetpolarisierung erfasst werden.

Vorzugsweise ist das Stromversorgungsteil dazu eingerichtet, den mindestens einen Sensor mit Strom zu versorgen.

Der Mikroprozessor kann insbesondere dazu eingerichtet sein, ein durch den mindestens einen Sensor ausgegebenes Messsignal in ein Informationssignal zu verarbeiten, und die erste Antennenvorrichtung dazu eingerichtet sein, ein durch den Mikroprozessor ausgegebene Informationssignal kabellos, insbesondere an ein Kommunikationsmodul des Grundgeräts des Küchengeräts zu übermitteln.

Eine Reaktion des Grundgeräts kann in Abhängigkeit vom Ergebnis einer Erfassung mittels des mindestens einen Sensors erfolgen, beispielsweise unter der Form einer Auswahl mindestens eines Zubereitungsparameters für einen Zubereitungsvorgang. Konkret ist vorstellbar, dass nach Erfassung eines bestimmungsgemäßen Anbringens eines Deckels auf dem Aufnahmegefäß ein Zubereitungsvorgang automatisch ausgelöst wird.

Bei einer entsprechenden Ausführungsform des Verfahrens wird ein am Aufnahmegefäß angeordneter Sensor durch das Stromversorgungsteil mit Strom versorgt. Ferner kann ein Wert für einen Zustand eines Teiles des Küchengeräts und / oder ein Wert für einen Zustand eines durch das Aufnahmegefäß aufgenommenen Lebensmittels durch den Sensor erfasst werden, der mindestens eine erfasste Wert wird an die erste Antennenvorrichtung des Aufnahmegefäßes übertragen, der mindestens eine erfasste Wert wird durch den Transceiver ausgewertet und das Ergebnis der Auswertung wird durch die erste Antennenvorrichtung des Aufnahmegefäßes an das erste Kommunikationsmodul des Grundgeräts kabellos übertragen.

Derart können Informationen vom Aufnahmegefäß an das Grundgerät und auch vom Grundgerät an das Aufnahmegefäß übertragen werden. So können zum Beispiel Werte, die durch einen Sensor am Aufnahmegefäß erfasst worden sind, zentral am Grundgerät ausgewertet werden und für die gesamte Steuerung des Küchengeräts verwendet werden, wobei die Steuerung auch Funktionen umfasst, die mithilfe des Aufnahmegefäßes durchgeführt werden sollen.

Bei einer Ausführungsform des Aufnahmegefäßes weist das Aufnahmegefäß einen Verbindungsabschnitt auf, der zur mechanischen Verbindung mit einem Grundgerät des Küchengeräts ausgebildet ist, und die erste Antennenvorrichtung an einem Abschnitt des Bauteils angeordnet, der dem Verbindungsabschnitt am nächsten angeordnet ist.

Diese Ausführungsform ermöglicht eine kompakte Ausbildung des Aufnahmegefäßes. Insbesondere dienen parallel der Verbindungsabschnitt zur mechanischen Verbindung des Aufnahmegefäßes mit dem Grundgerät und die erste Antennenvorrichtung zur Signalübertragung zwischen dem Aufnahmegefäß und dem Grundgerät. Aufgrund der für die mechanische Verbindung erforderlichen physischen Nähe des Verbindungsabschnitts des Aufnahmegefäßes mit dem Grundgerät wird gewährleistet, dass in einem montierten Zustand die erste Antennenvorrichtung des Aufnahmegefäßes zur Verbesserung der Kommunikationsbedingungen möglichst nah an das Grundgerät angeordnet wird.

Bei einer Ausführungsform des Aufnahmegefäßes weist die Wandung eine nach oben gerichtete Öffnung auf, so dass der durch die Wandung gebildete Aufnahmeraum nach oben offen ist, und die zweite Antennenvorrichtung ist an einem Abschnitt des Bauteils angeordnet, der der nach oben gerichteten Öffnung der Wandung am nächsten angeordnet ist.

Bei einer entsprechenden Ausführungsform des Küchengeräts weist die Wandung des Aufnahmegefäßes eine nach oben gerichtete Öffnung auf, so dass der durch die Wandung gebildete Aufnahmeraum nach oben offen ist. Außerdem ist ein zur Abdeckung der nach oben gerichteten Öffnung der Wandung des Aufnahmegefäßes ausgebildetes Abdeckungsteil vorgesehen, eine zur kabellosen Kommunikation mit der zweiten Antennenvorrichtung des Aufnahmegefäßes eingerichtete Kommunikationseinheit ist am Abdeckungsteil angeordnet und die zweite Antennenvorrichtung des Aufnahmegefäßes ist an einem Abschnitt des Bauteils angeordnet, der der nach oben gerichteten Öffnung der Wandung am Nächsten angeordnet ist.

Auf diese Weise wird eine Nähe der zweiten Antennenvorrichtung des Aufnahmegefäßes mit der Kommunikationseinheit am Abdeckungsteil gewährleistet, was insbesondere im Falle einer Nahfeldkommunikation von Vorteil ist. Wenn die zweite Antennenvorrichtung des Aufnahmegefäßes für eine Kommunikation mit einem Smartphone eingerichtet ist, ist die hier vorgeschlagene Position am Bauteil gut erreichbar und so auch angenehm für den Nutzer.

Bei einer Ausführungsform des Küchengerätes ist ein erstes Zubehörteil mit einer ersten Kommunikationseinheit vorgesehen und die zweite Antennenvorrichtung des Aufnahmegefäßes und die erste Kommunikationseinheit des ersten Zubehörteils sind zur drahtlosen Kommunikation eingerichtet.

Dadurch können Signale im System umfassen das Grundgerät, das Aufnahmegefäß und das erste Zubehörteil ausgetauscht werden, und dabei auf schwer zu reinigenden Steckerelemente verzichtet werden.

Bei einer weiteren Ausführungsform des Küchengerätes weist das erste Zubehörteil eine zweite Kommunikationseinheit und ein Anpassungsnetzwerk auf. Die erste Kommunikationseinheit, das Anpassungsnetzwerk und die zweite Kommunikationseinheit sind kabelverbunden. Das Anpassungsnetzwerk des ersten Zubehörteils ist dazu eingerichtet, ein durch die zweite Kommunikationseinheit empfangene Signal an Eigenschaften der ersten Kommunikationseinheit anzupassen. Ein zum Einsatz im Aufnahmeraum des Aufnahmegefäßes vorgesehenen, zweites Zubehörteil mit einem Kommunikationsmittel ist vorgesehen und die zweite Kommunikationseinheit des ersten Zubehörteils ist dazu eingerichtet, mit einem Kommunikationsmittel des zweiten Zubehörteils kabellos zu kommunizieren.

Hiermit kann ein Zubehörteil, das sich in der Reichweite der zweiten Kommunikationseinheit befindet, durch diese erfasst werden und das Ergebnis der Erfassung über die Antennenvorrichtungen des Aufnahmegefäßes an das erste Kommunikationsmodul des Grundgeräts ggf. für eine entsprechende zentrale Steuerung übertragen werden. Insgesamt können Zubehörteile, die im Aufnahmeraum des Aufnahmegefäßes angeordnet sind, trotz abschirmender Materialzusammensetzung der Wandung des Aufnahmegefäßes erfasst und automatisch erkannt werden.

Bei einer Ausführungsform des Aufnahmegefäßes ist das Bauteil im Wesentlichen aus einem für elektromagnetischen Wellen zumindest teilweise durchlässigen Material ausgebildet und die erste Antennenvorrichtung und die zweite Antennenvorrichtung sind im Bauteil integriert.

Dementsprechend kann das Aufnahmegefäß, insbesondere das Bauteil, luft- und wasserdicht ausgebildet sein. So lässt sich das Aufnahmegefäß einfach reinigen.

Außerdem kann dadurch eine Signalübertragung zwischen der ersten Antennenvorrichtung des Aufnahmegefäßes und dem ersten Kommunikationsmodul des Grundgeräts ungehindert erfolgen.

Vorzugsweise weist das Bauteil ein Gehäuse aus einem für elektromagnetische Wellen durchlässigen Material, beispielsweise Kunststoff, auf, und die erste Antennenvorrichtung und die zweite Antennenvorrichtung sind in dem Gehäuse angeordnet.

Daneben kann die Wandung des Aufnahmegefäßes zumindest teilweise aus einem Material ausgebildet sein, das für elektromagnetische Wellen zumindest teilweise undurchlässig ist. Die Durchlässigkeit eines Materials gegenüber elektromagnetischen Wellen oder Felder ist abhängig von der Leitfähigkeit und Permeabilität des Materials sowie von der Frequenz der Wellen oder des Feldes. Für elektromagnetische Wellen oder Felder, die durch einen Nahfeldkommunikations-Transceiver emittiert werden, ist Edelstrahl im Wesentlichen undurchlässig bzw. dämpft diese Wellen überwiegend ab. Im Rahmen der vorliegenden Erfindung hat sich Edelstahl für elektromagnetische Wellen mit einer Frequenz von etwa 13,56 MHz als im Wesentlichen undurchlässig erwiesen. Dabei wurde die im Wesentlichen Undurchlässigkeit des Materials an Bereichen der Wandung des Aufnahmegefäßes getestet, die keine durchdringende Öffnung aufweisen. Vorzugsweise eignet sich zusätzlich das Material, um Lebensmittel hygienisch aufzunehmen, insbesondere bei erhöhten Temperaturen, die bei einer Lebensmittelzubereitung regelmäßig vorkommen.

Bei einer Ausführungsform des Aufnahmegefäßes ist das Bauteil als Griffelement, als Isolierungselement, als abnehmbares Zubehörteil, als Zusatzbauteil oder als eine Kombination hiervon ausgebildet.

Somit kann das Bauteil zusätzlich zur Repeater-Funktion zur Übertragung von Signalen auch eine oder weitere Funktion aufweisen, indem es beispielsweise als Griff oder Isolierung fungiert. Daneben kann das Bauteil einfach als Zusatzbauteil ausgebildet sein, das keine weitere Funktion außer die, die die Antennenvorrichtungen einbeziehen, aufweist.

Bei einer Ausführungsform des Küchengeräts ist ein zur Anordnung in einer durchdringenden Öffnung der Wandung des Aufnahmegefäßes ausgebildetes Verbindungselement vorgesehen, das Verbindungselement weist ein erstes Kommunikationsmittel und ein zweites Kommunikationsmittel auf, die miteinander kabelverbunden sind. Ferner ist ein zweites Kommunikationsmodul am Grundgerät vorgesehen und das zweite Kommunikationsmodul des Grundgeräts und das erste Kommunikationsmittel des Verbindungselements sind zur kabellosen Kommunikation miteinander eingerichtet. Außerdem ist das zweite Kommunikationsmittel des Verbindungselements zur kabellosen Kommunikation, insbesondere zur kabellosen Kommunikation mit einem Kommunikationsmittel eines zum Einsatz im Aufnahmeraum des Aufnahmegefäßes vorgesehenen Zubehörteils eingerichtet.

Dadurch lässt sich ein Zubehörteil ggf. trotz abschirmender Materialzusammensetzung der Wandung des Aufnahmegefäßes einfach und zuversichtlich erkennen. Mit anderen Worten kann das Verbindungselement als Wiederholungseinheit bzw. Relaisstation zwischen dem Grundgerät und dem Zubehörteil eingesetzt werden. In Kombination mit der Zubehörteilerfassung über das Abdeckungsteil und auch über das Bauteil wird das gesamte räumliche Erfassungsfeld erweitert, so dass Zubehörteile zuverlässiger erfasst bzw. erkannt werden können.

Außerdem kann ein Aufnahmegefäß, das ohnehin eine durchdringende Öffnung in der Wandung aufweist, um zum Beispiel eine Verbindung eines Zubehörteils mit dem Antrieb des Grundgeräts zu ermöglichen, weiterverwendet werden. Insgesamt können durch die Erfindung existierende Küchengeräte einfach umgerüstet und gleichzeitig die Nutzerfreundlichkeit gesteigert werden.

Die Wandung des Aufnahmegefäßes weist eine durchdringende Öffnung auf. Vorzugsweise ist die durchdringende Öffnung in dem Boden ausgebildet, insbesondere wenn das Aufnahmegefäß zur Verbindung mit dem Grundgerät im Bodenbereich bestimmt ist. Alternativ kann die durchdringende Öffnung an einer Wand der Wandung vorgesehen sein. In diesem Fall sind die Erfordernisse an Dichtheit gegenüber in dem Aufnahmeraum des Aufnahmegefäßes aufgenommenen Lebensmitteln geringer, und so auch die Herstellung des Küchengeräts einfacher.

Ein Verbindungselement im Sinne der vorliegenden Erfindung ist ein Element, das zur Gewährleistung einer Kommunikationsverbindung zwischen dem Zubehörteil und dem Grundgerät geeignet ist. Es ist vorgesehen, dass das Verbindungselement zur Anordnung in der durchdringenden Öffnung der Wandung des Aufnahmegefäßes ausgebildet ist. Auf diese Weise kann das Verbindungselement ein Signal, insbesondere in Form einer elektromagnetischen Welle, das vom zweiten Kommunikationsmodul am Grundgerät an einer Seite der Wandung emittiert worden ist, durch die Wandung übertragen und an das Zubehörteil weiterleiten. Dies gilt ebenso in die umgekehrte Richtung, also für ein Signal, das von dem Zubehörteil in Richtung des zweiten Kommunikationsmodul des Grundgeräts übertragen wird.

Zur Anordnung in der durchdringenden Öffnung der Wandung des Aufnahmegefäßes weist das Verbindungselement vorzugsweise einen Grundkörper mit einer Formgebung auf, die zumindest abschnittsweise an die Formgebung der durchdringenden Öffnung angepasst ist. Ein Dichtungselement kann zwischen dem Grundkörper des Verbindungselements und der Innenwand der Öffnung vorgesehen sein.

Bei einer Ausführungsform des Küchengeräts ist eine Steuereinrichtung mit einem ersten Betriebsmodus, mit einem zweiten Betriebsmodus und mit einem dritten Betriebsmodus vorgesehen, wobei im ersten Betriebsmodus die Steuereinrichtung Signale aus dem ersten Kommunikationsmodul auswertet, wobei im zweiten Betriebsmodus die Steuereinrichtung Signale aus dem zweiten Kommunikationsmodul auswertet, und wobei im dritten Betriebsmodus die Steuereinrichtung Signale aus dem ersten Kommunikationsmodul und Signale aus dem zweiten Kommunikationsmodul zusammen auswertet.

Bei einer entsprechenden Ausführungsform des Verfahrens wird ein Signal durch das erste Kommunikationsmodul des Grundgeräts empfangen und / oder ein Signal wird durch ein zweites, am Grundgerät vorgesehenes und zur kabellosen Kommunikation eingerichtetes Kommunikationsmodul empfangen. Ferner wird eine Steuereinrichtung des Grundgeräts in einem ersten Betriebsmodus, bei dem das durch das erste Kommunikationsmodul empfangene Signal ausgewertet wird, in einem zweiten Betriebsmodus, bei dem das durch das zweite Kommunikationsmodul empfangene Signal ausgewertet wird, oder in einem dritten Betriebsmodus, bei dem das durch das erste Kommunikationsmodul empfangene Signal und das durch das zweite Kommunikationsmodul empfangene Signal ausgewertet werden, betrieben.

Dadurch lässt sich bei der Steuerung des Küchengeräts eine Zubehörteilerkennung berücksichtigen, wobei die Zubehörteilerkennung wahlweise auf der Basis von einem über das Verbindungselement übertragenen Signal oder auf der Basis von einem über das Bauteil des Aufnahmegefäßes übertragenen Signal erfolgt.

Insbesondere kann eine Umschaltung von einem Betriebsmodus in einen anderen vorgesehen sein. Diese Umschaltung kann dadurch erfolgen, dass eine Nutzereingabe mit einem Umschaltbefehl erfasst wird, und die Steuereinrichtung als Reaktion auf die Nutzereingabe in den entsprechenden Betriebsmodus wechselt. Hierzu kann ein Umschaltelement am Bauteil vorgesehen sein.

Alternativ oder zusätzlich kann die Umschaltung in Abhängigkeit von der Herkunft des Signals, das heißt in Abhängigkeit davon, ob ein Signal vom ersten Kommunikationsmodul oder vom zweiten Kommunikationsmodul empfangen wurde, automatisch erfolgen.

Weitere Merkmale und Vorteile des Aufnahmegefäßes und des Küchengeräts und der Verfahren ergeben sich aus der nachfolgenden Beschreibung von Ausführungsbeispielen, wobei auf die beigefügte Zeichnung Bezug genommen wird.

In der Zeichnung zeigen
- Fig. 1: ein erstes Ausführungsbeispiel für ein Aufnahmegefäß;
- Fig. 2: ein vereinfachtes Blockdiagramm für ein Stromversorgungsteil eines Aufnahmegefäßes;
- Fig. 3: ein erstes Ausführungsbeispiel für ein Küchengerät;
- Fig. 4: ein vereinfachtes Blockdiagramm für Bauteile des Küchengeräts aus der Fig. 3, die an einer Signalübertragung beteiligt sind;
- Fig. 5: ein zweites Ausführungsbeispiel für ein Küchengerät;
- Fig. 6: ein vereinfachtes Blockdiagramm für Bauteile des Küchengeräts aus der Fig. 5, die an einer Signalübertragung beteiligt sind;
- Fig. 7: ein drittes Ausführungsbeispiel für ein Küchengerät;
- Fig. 8: ein vereinfachtes Blockdiagramm für Bauteile des Aufnahmegefäßes des Küchengeräts aus der Fig. 5, die an einer Signalübertragung beteiligt sind,
- Fig. 9: ein Flussdiagramm für ein Verfahren zum Betreiben eines Küchengeräts, und
- Fig. 10: ein Blockdiagramm für ein Anpassungsnetzwerk.

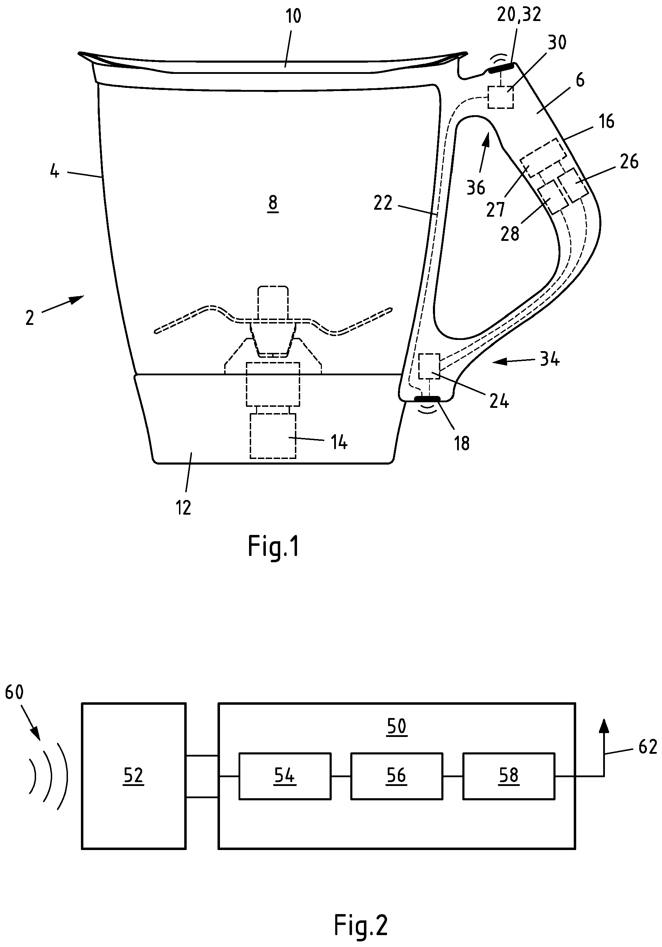

Fig. 1 zeigt ein erstes Ausführungsbeispiel für ein Aufnahmegefäß 2. Das Aufnahmegefäß 2 weist eine Wandung 4 und ein Bauteil 6auf. Die Wandung 4 bildet einen Aufnahmeraum 8 zur Aufnahme von Lebensmitteln und weist eine nach oben gerichtete Öffnung 10 auf, so dass der durch die Wandung 4 gebildete Aufnahmeraum 8 nach oben offen ist. Die Wandung 4 weist einen Boden 12 auf, an dem ein Verbindungsabschnitt 14 zur mechanischen Verbindung mit einem Grundgerät eines Küchengeräts vorgesehen ist. Außerdem ist die Wandung 4 im Wesentlichen aus Edelstahl, der eine kontaktlose Signalübertragung durch die Wandung 4 hindurch überwiegend hindert, ausgebildet.

Das Bauteil 6 ist als Griff ausgebildet und mit der Wandung 4 mechanisch verbunden. Ferner ist das Bauteil 6 derart an der Wandung 4 angebracht, dass es außerhalb des durch die Wandung 4 gebildeten Aufnahmeraums 8 angeordnet ist. Das Bauteil 6 weist ein Gehäuse 16 auf, das im Wesentlichen aus Kunststoff ausgebildet ist, und dessen Haupterstreckungsrichtung den Rand der nach oben gerichteten Öffnung 10 der Wandung 4 und den Verbindungsabschnitt 14 für die mechanische Verbindung mit einem Grundgerät verbindet.

Am Bauteil 6 sind eine erste Antennenvorrichtung 18 und eine zweite Antennenvorrichtung 20 vorgesehen. Beide sind jeweils zur kabellosen Kommunikation mit anderweitigen Kommunikationsmitteln eingerichtet.

Die erste Antennenvorrichtung 18 ist mit einem Anpassungsnetzwerk 24, einem Nahfeldkommunikation-Transceiver 26 mit einem Mikroprozessor 27 und ein Stromversorgungsteil 28 verbunden. Das Stromversorgungsteil 28 ist dazu eingerichtet, aus einem durch die erste Antennenvorrichtung 18 kabellos empfangenen Signal Strom zu erzeugen und den Mikroprozessor 27 mit Strom zu versorgen. Die zweite Antennenvorrichtung 20 weist ein einen passiven Nahfeldkommunikation-Transmitter 32 auf und ist mit einem Anpassungsnetzwerk 30 verbunden.

Die erste Antennenvorrichtung 18 ist über eine Kabelverbindung 22 mit dem Anpassungsnetzwerk 30 verbunden.

Die erste Antennenvorrichtung 18 ist am Abschnitt 34 des Bauteils 6 angeordnet, der dem Verbindungsabschnitt 14 am nächsten angeordnet ist. Ferner ist die zweite Antennenvorrichtung 20 am Abschnitt 36 des Bauteils 6 angeordnet, der der Öffnung 10 der Wandung 4 am nächsten angeordnet ist. Sowohl die erste Antennenvorrichtung 18 als auch die zweite Antennenvorrichtung 20 sind dem Gehäuse 16 des Bauteils 6 angeordnet und somit im Bauteil 6 integriert.

Fig. 2 zeigt ein vereinfachtes Blockdiagramm für ein Stromversorgungsteil 50 eines Aufnahmegefäßes. Das Stromversorgungsteil 50 ist dazu eingerichtet, aus einem kabellos bzw. kontaktlos empfangenen Signal einen Strom zu erzeugen. Hierzu ist das Stromversorgungsteil 50 mit einem Anpassungsnetzwerk 52 mit einer nicht gezeigten Verschaltung von Widerständen, Kapazitäten und Induktivitäten verbunden. Das Stromversorgungsteil 50 weist einen Filter 54 zur elektromagnetischen Verträglichkeit bzw. einen sogenannten "EMC filter", einen Gleichrichter 56 und einen Spannungsregler 58 auf.

Bei einem bestimmungsgemäßen Einsatz und beim Anlegen eines Hochfrequenzsignals, zum Beispiel eines Nahfeldkommunikationssignals, werden Eigenschaften einer mit dem Anpassungsnetzwerk 52 verbundenen Antennenvorrichtung angepasst, um ein Empfangen eines Signals zu ermöglichen. Das empfangene Signal 60 wird dann an das Stromversorgungsteil 50 übertragen, das das Signal 62 dann in einen Strom umwandelt und zur Versorgung weiterer Bauteile ausgibt.

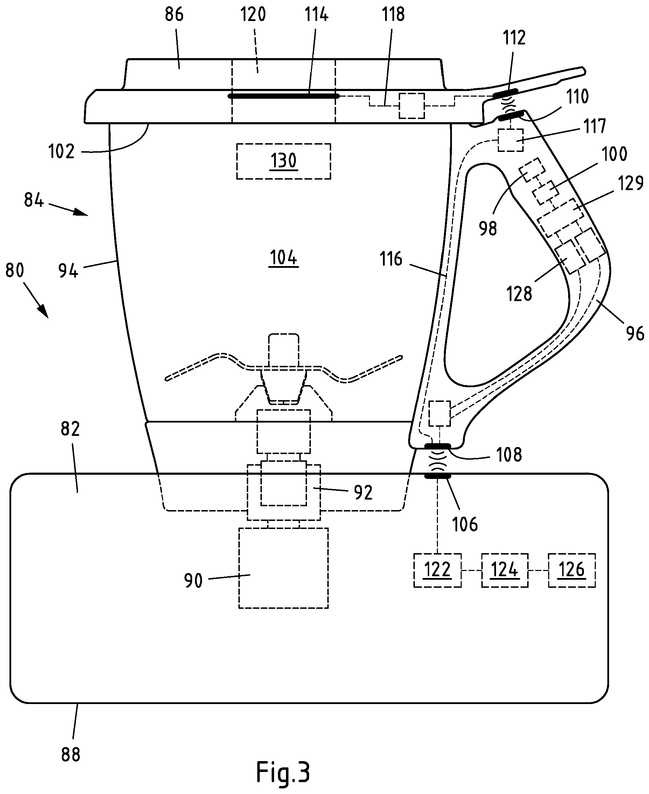

Fig. 3 zeigt ein erstes Ausführungsbeispiel für ein Küchengerät 80 mit einem Grundgerät 82, mit einem Aufnahmegefäß 84 und mit einem als Abdeckungsteil 86 ausgebildetem Zubehörteil.

Das Grundgerät 82 weist ein Gehäuse 88, einen Elektromotor 90 und einen Verbindungsabschnitt 92 zur mechanischen Verbindung mit dem Aufnahmegefäß 84 auf. Das Aufnahmegefäß 84 weist eine Wandung 94 und ein Bauteil 96 mit denselben Merkmalen und Bauteilen auf wie das Aufnahmegefäß 84 aus der Fig. 1. Hier sind am Aufnahmegefäß 84 zusätzlich zwei Sensoren 98, 100 vorgesehen. Die Wandung 94 des Aufnahmegefäßes 84 weist auch hier eine nach oben gerichtete Öffnung 102 auf, so dass der durch die Wandung 94 gebildete Aufnahmeraum 104 nach oben offen ist. Das Abdeckungsteil 86 ist zur Abdeckung der nach oben gerichteten Öffnung 102 der Wandung 94 des Aufnahmegefäßes 84 und so zum Abschließen des Aufnahmeraums 104 ausgebildet.

Das Küchengerät 80 weist ein Kommunikationssystem auf, das sich wie folgt zusammensetzt: ein erstes Kommunikationsmodul 106 am Grundgerät 82, eine erste Antennenvorrichtung 108 und eine zweite Antennenvorrichtung 110 am Bauteil 96 des Aufnahmegefäßes 84, sowie eine erste Kommunikationseinheit 112 und eine zweite Kommunikationseinheit 114 am Abdeckungsteil 86. Das erste Kommunikationsmodul 106 am Grundgerät 82 und die erste Antennenvorrichtung 108 am Bauteil 96 sind zur kabellosen Kommunikation miteinander eingerichtet. Die erste Antennenvorrichtung 108 ist mit einem Anpassungsnetzwerk 117 verbunden, der wiederum mit der zweiten Antennenvorrichtung 110 am Bauteil 96 über eine Kabelverbindung 116 verbunden ist. Die zweite Antennenvorrichtung 110 am Bauteil 96 und die erste Kommunikationseinheit 112 am Abdeckungsteil 86 sind zur kabellosen Kommunikation miteinander eingerichtet. Die erste Kommunikationseinheit 112 ist wiederum mit der zweiten Kommunikationseinheit 114 am Abdeckungsteil 86 über eine Kabelverbindung 118 verbunden. Beim vorliegenden Ausführungsbeispiel ist die zweite Kommunikationseinheit 114 an einer zentrierten Öffnung 120 des Abdeckungsteils 86 angeordnet.

Das erste Kommunikationsmodul 106 weist ein Anpassungsnetzwerk 122, einen Transceiver 124 und einen Mikroprozessor 126 auf.

Das erste Kommunikationsmodul 106 und die erste Antennenvorrichtung 108 sind jeweils am Grundgerät 82 und am Bauteil 96 des Aufnahmegefäßes 84 derart angeordnet, dass diese in einem bestimmungsgemäßen montierten Zustand des Küchengeräts 80 in gegenseitiger Signalübertragungsreichweite liegen.

Daneben sind die zweite Antennenvorrichtung 110 und die erste Kommunikationseinheit 112 jeweils am Bauteil 96 am Abdeckungsteil 86 derart angeordnet, dass diese in einem bestimmungsgemäßen montierten Zustand des Küchengeräts 80 in gegenseitiger Signalübertragungsreichweite liegen.

Ein Stromversorgungsteil 128 der ersten Antennenvorrichtung 108 des Aufnahmegefäßes 84 ist dazu eingerichtet, den Mikroprozessor 129 und die Sensoren 98, 100 mit Strom zu versorgen.

Bei einem bestimmungsgemäßen Gebrauch erfasst die zweite Kommunikationseinheit 114 ein Zubehörteil 130, das in dem Aufnahmeraum 104 des Aufnahmegefäßes 84 und in der Reichweite der zweiten Kommunikationseinheit 114 liegt, und überträgt ein entsprechendes Signal über das Kommunikationssystem bis zum Grundgerät 82. Das Grundgerät 82 wertet das Signal aus und erkennt ggf. das Zubehörteil 130.

Somit ist die erste Antennenvorrichtung 108 am Bauteil 96 des Aufnahmegefäßes 84 für mindestens vier Funktionen eingerichtet. Eine erste Funktion besteht darin, ein kabellos empfangenes Signal über die Kabelverbindung 116 an die zweite Antennenvorrichtung 110 des Aufnahmegefäßes 84 weiterzuleiten. In einer zweiten Funktion leitet die erste Antennenvorrichtung 108 ein aus der zweiten Antennenvorrichtung 110 des Aufnahmegefäßes 84 empfangenes Signal an das erste Kommunikationsmodul 106 des Grundgeräts 82. Die erste Funktion und die zweite Funktion zusammen entsprechen einer Eignung zur bidirektionalen Kommunikation mit dem ersten Kommunikationsmodul 106 des Grundgeräts 82. Gemäß einer dritten Funktion kann das empfangene Signal weiteren Bauteilen, beispielsweise dem Mikroprozessor 129 und ggf. den Sensoren 98, 100 weitergeleitet werden. Die vierte Funktion wird erwirkt, indem die erste Antennenvorrichtung 108 mit dem Stromversorgungsteil 128 einen Strom aus einem empfangenen Signal erzeugt und den erzeugten Strom weiteren Bauteilen, beispielsweise dem Mikroprozessor 129 und die Sensoren 98, 100, zur Verfügung stellt.

Die zweite Antennenvorrichtung 110 am Bauteil 96 ist für mindestens zwei Funktionen einsetzbar. Bei einer ersten Funktion dient die zweite Antennenvorrichtung 110 am Bauteil 96 einem Nutzer als Schnittstelle zur Datenübertragung bis an das Grundgerät 82. Ein Nutzer kann mit RFID-Transpondern (Tags) ausgerüstete Zubehörteile oder auch ein Smartphone mit NFC-Schnittstelle in den Lesebereich der zweiten Antennenvorrichtung 110 bringen, wo eine Erfassung des Informationsinhaltes des Transponders erfolgt. Durch Weiterleiten via das Bauteil 96 an das Grundgerät 82 kann das Grundgerät 82 den Transponder erkennen und mit der Transponderinformation verknüpfte Aktionen ausführen.

Daneben und in einer zweiten Funktion dient die zweite Antennenvorrichtung 110 am Bauteil 96 als sogenanntes "Gateway" bei Erkennung des Abdeckungsteils 86. Ist das Abdeckungsteil 86 aufgesetzt, dann koppelt die zweite Antennenvorrichtung 110 am Bauteil 96 mit der ersten Kommunikationseinheit 112, indem Eigenschaften der ersten Kommunikationseinheit mithilfe eines Kondensators der ersten Kommunikationseinheit angepasst werden. So wirkt der Kondensator als Anpassungsnetzwerk wirkt. Die erste Kommunikationseinheit 112 des Abdeckungsteils 86 befindet sich bei bestimmungsgemäßem Anbringen am Aufnahmegefäß 84 in der Reichweite der zweiten Antennenvorrichtung 110 im Bauteil 96 des Aufnahmegefäßes 84.

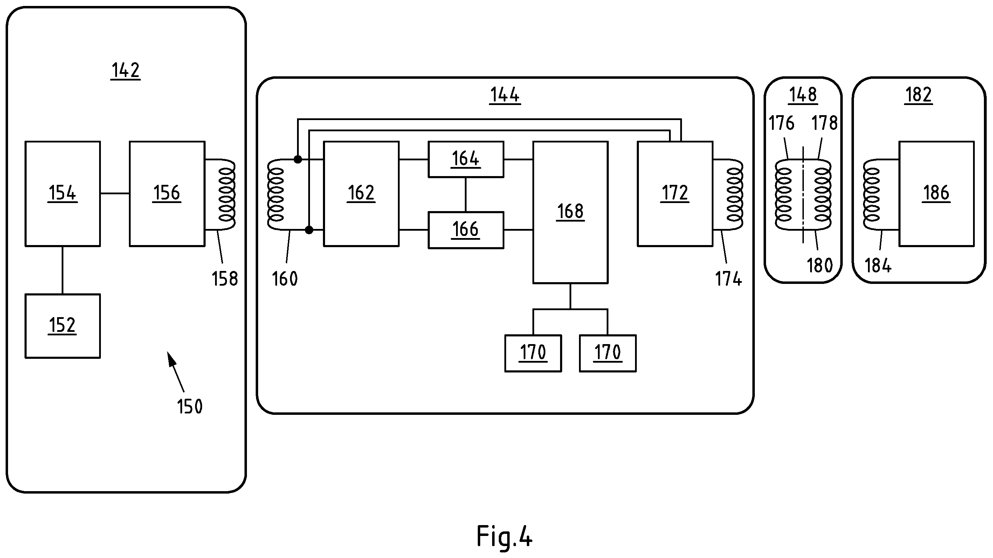

Fig. 4 zeigt ein vereinfachtes Blockdiagramm für Bauteile des Küchengeräts aus der Fig. 3, die an eine Signalübertragung beteiligt sind. Hierbei sind das Grundgerät, das Bauteil 144 des Aufnahmegefäßes 146 und das Abdeckungsteil 148 jeweils schematisch mit einem Block dargestellt.

Das erste Kommunikationsmodul 150 des Grundgeräts 142 weist einen Mikroprozessor 152, einen Transceiver 154, ein Anpassungsnetzwerk 156 und eine spulenartige Antenne 158 auf. Der Mikroprozessor 152 in dem Blockdiagramm der Fig. 4 speilt die gleiche Rolle wie der Mikroprozessor 126 aus dem Grundgerät in der Fig. 3.

Am Bauteil 144 sind, von links nach rechts angeordnet, eine erste spulenartige Antenne 160, ein Anpassungsnetzwerk 162, ein Stromversorgungsteil 164, ein Transceiver 166, ein Mikroprozessor 168, zwei Sensoren 170, ein weiteres Anpassungsnetzwerk 172 und eine weitere spulenartige Antenne 174 vorgesehen. Die erste spulenartige Antenne 160 ist mit dem Anpassungsnetzwerk 172 kabelverbunden, wobei das Anpassungsnetzwerk 172 wiederum mit der zweiten spulenartigen Antenne 174 kabelverbunden ist. Die weitere spulenartige Antenne 174 kann in ähnlicher Weise wie der passive Nahfeldkommunikation-Transmitter 32 aus der Fig. 1 eingesetzt werden.

Am Abdeckungsteil 148 sind eine erste spulenartige Antenne 176 und eine weitere spulenartige Antenne 178 vorgesehen, die über eine Kabelverbindung 180 miteinander verbunden sind.

Zusätzlich ist ein Zubehörteil 182 mit einem entsprechenden Block schematisch dargestellt, das eine spulenartige Antenne 184 und ein Funketikett 186 aufweist.

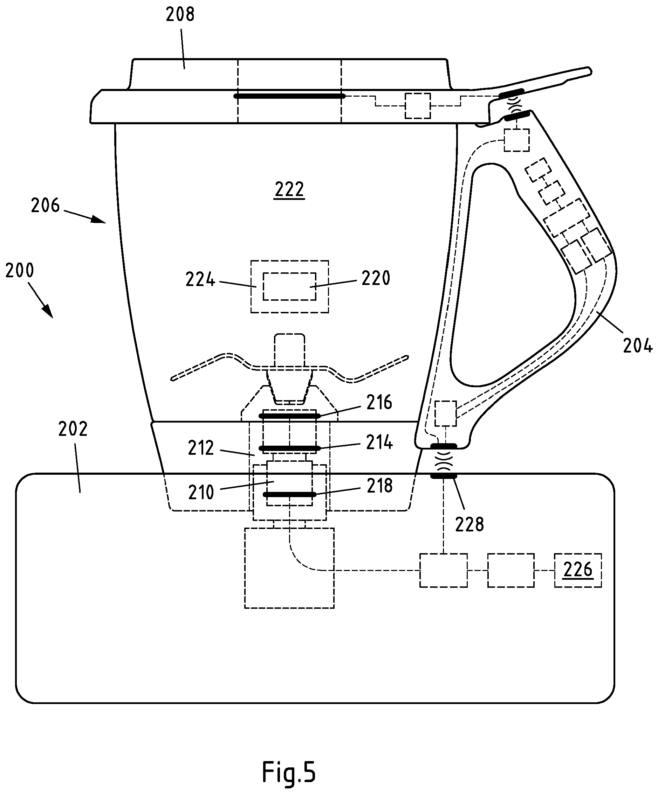

Fig. 5 zeigt ein zweites Ausführungsbeispiel für ein Küchengerät 200 mit einem Grundgerät 202, mit einem ein Bauteil 204 aufweisenden Aufnahmegefäß 206 und mit einem Abdeckungsteil 208. Dieses Ausführungsbeispiel baut auf dem Prinzip des Küchengeräts 200, das in der Fig. 3 gezeigt ist, auf. Zusätzlich zu den in Zusammenhang mit dem Ausführungsbeispiel aus der Fig. 3 erläuterten Merkmalen ist in der Fig. 5 an einem Verbindungselement 210, das zur Anordnung in einer durchdringenden Öffnung 212 der Wandung des Aufnahmegefäßes 206 ausgebildet ist, eine Erweiterung des Kommunikationssystems vorgesehen. Beim vorliegenden Ausführungsbeispiel ist das Verbindungselement 210 als Schneideeinheit mit einer Messerwelle ausgebildet.

Das Verbindungselement 210 weist ein erstes Kommunikationsmittel 214 und ein zweites Kommunikationsmittel 216 auf, die miteinander kabelverbunden sind. Am Grundgerät 202 ist ein zweites Kommunikationsmodul 218 vorgesehen. Das zweite Kommunikationsmodul 218 des Grundgeräts 202 und das erste Kommunikationsmittel 214 des Verbindungselements 210 sind zur kabellosen Kommunikation miteinander eingerichtet.

Das zweite Kommunikationsmittel 216 des Verbindungselements 210 ist zur kabellosen Kommunikation mit einem Kommunikationsmittel 220 eines zum Einsatz im Aufnahmeraum 222 des Aufnahmegefäßes 206 vorgesehenen Zubehörteils 224 eingerichtet.

Außerdem ist eine Steuereinrichtung 226 am Grundgerät 202 vorgesehen, die als Mikroprozessor mit einem aktiven Teil ausgebildet ist. Die Steuereinrichtung 226 ist mit einem ersten Betriebsmodus, mit einem zweiten Betriebsmodus und mit einem dritten Betriebsmodus vorgesehen. Im ersten Betriebsmodus wertet die Steuereinrichtung 226 Signale aus dem ersten Kommunikationsmodul 228 aus, im zweiten Betriebsmodus wertet die Steuereinrichtung 226 Signale aus dem zweiten Kommunikationsmodul 218 aus, und im dritten Betriebsmodus wertet die Steuereinrichtung 226 Signale aus dem ersten Kommunikationsmodul 228 und Signale aus dem zweiten Kommunikationsmodul 218 zusammen aus. Die Steuereinrichtung 226 ist dazu eingerichtet, von einem Betriebsmodus in einen anderen automatisch in Abhängigkeit davon umzuschalten, ob und durch welche das erste Kommunikationsmodul 228 oder das zweite Kommunikationsmodul 218 ein Signal empfängt.

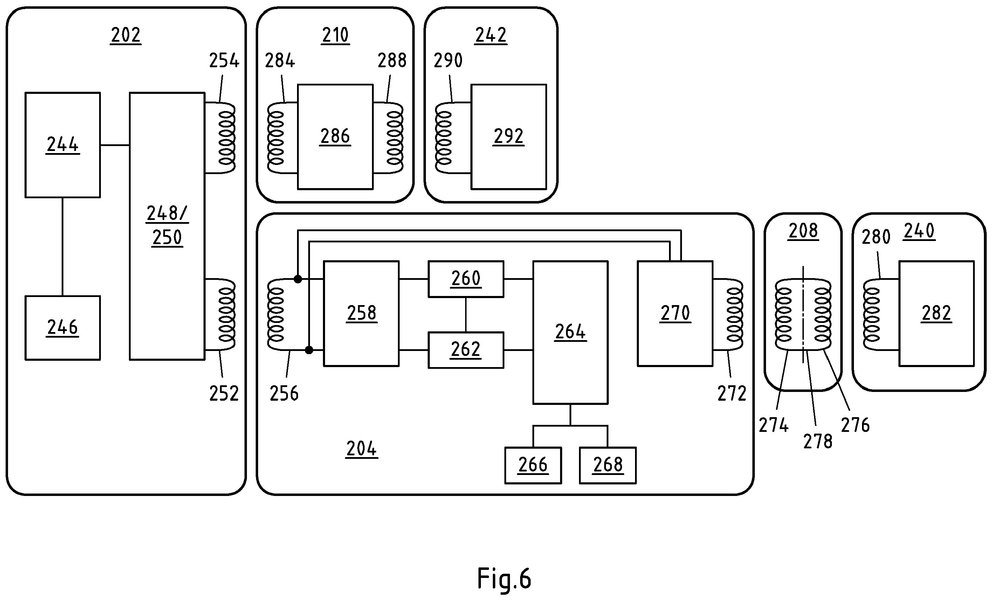

Fig. 6 zeigt ein vereinfachtes Blockdiagramm für Bauteile des Küchengeräts 200 aus der Fig. 5, die an eine Signalübertragung beteiligt sind. Es sind das Grundgerät 202, das Bauteil 204 des Aufnahmegefäßes 206, das Abdeckungsteil 208, ein erstes Zubehörteil 240, das Verbindungselement 210 und ein weiteres Zubehörteil 242 als Blöcke schematisch dargestellt.

Das Grundgerät 202 weist einen Transceiver 244, einen Mikroprozessor 246, ein Anpassungsnetzwerk 248, ein Umschaltelement 250, eine erste spulenartige Antenne 252 und eine zweite spulenartige Antenne 254 auf.

Das Bauteil 204 weist, von links nach rechts dargestellt, eine erste spulenartige Antenne 256, die zur kabellosen Kommunikation mit der ersten spulenartigen Antenne 252 des Grundgeräts 202 eingerichtet ist, ein Anpassungsnetzwerk 258, ein Stromversorgungsteil 260, ein Transceiver 262, einen Mikroprozessor 264, zwei Sensoren 266, 268, ein weiteres Anpassungsnetzwerk 270 und eine weitere spulenartige Antenne 272 auf. Dier erste spulenartigen Antenne 256 ist mit dem Anpassungsnetzwerk 270 verbunden, das wiederum mit der zweiten spulenartigen Antenne 272 verbunden ist. Am Abdeckungsteil 208 sind eine erste spulenartige Antenne 274 und eine weitere spulenartige Antenne 276 vorgesehen, die über eine Kabelverbindung 278 miteinander verbunden sind. Das erste Zubehörteil 240 weist wiederum eine spulenartige Antenne 280 und eine Funketikett 282 auf.

Das Verbindungselement 210 ist mit einer ersten spulenartigen Antenne 284, die zur kabellosen Kommunikation mit der zweiten spulenartigen Antenne 254 des Grundgeräts 202 eingerichtet ist, mit einem Anpassungsnetzwerk 286 und mit einer weiteren spulenartigen Antenne 288 vorgesehen. Das zweite Zubehörteil 242 weist wiederum eine spulenartige Antenne 290 zur Kommunikation mit der weiteren Antenne 288 des Verbindungselements 210 und eine Funketikett 292 auf.

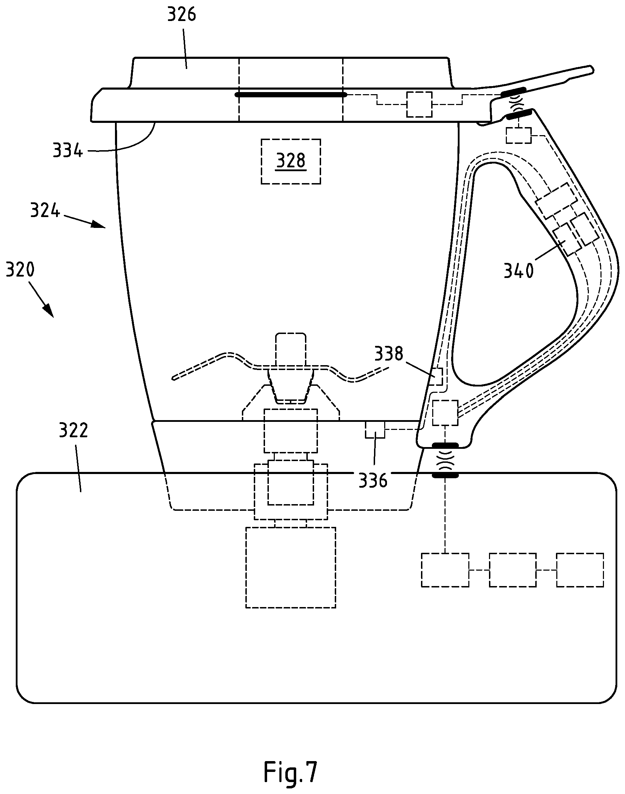

Fig. 7 zeigt ein drittes Ausführungsbeispiel für ein Küchengerät 320 mit einem Grundgerät 322, mit einem Aufnahmegefäß 324, mit einem Abdeckungsteil 326 und mit einem Zubehörteil 328. Das Küchengerät 320 ist ähnlich wie im Ausführungsbeispiel der Fig. 3 ausgebildet, wobei am Boden und an der Wandung des Aufnahmegefäßes 324 Temperatursensoren 336, 338 vorgesehen sind.

Das Stromversorgungsteil 340 versorgt den Mikroprozessor mit Strom, wobei dem Mikroprozessor wiederum mit den Temperatursensoren 336, 338, die am Aufnahmegefäß 324 angeordnet sind, verbunden ist. Durch die Verbindung des Mikroprozessors mit den Sensoren können die Sensoren mit Strom versorgt werden. Das System kann alternativ oder zusätzlich zu Sensoren, die durch das Stromversorgungsteil 340 mit Strom versorgt werden können, mindestens einen Sensor aufweisen, dessen Energiehaushalt unabhängig vom Stromversorgungsteil 340 ist.

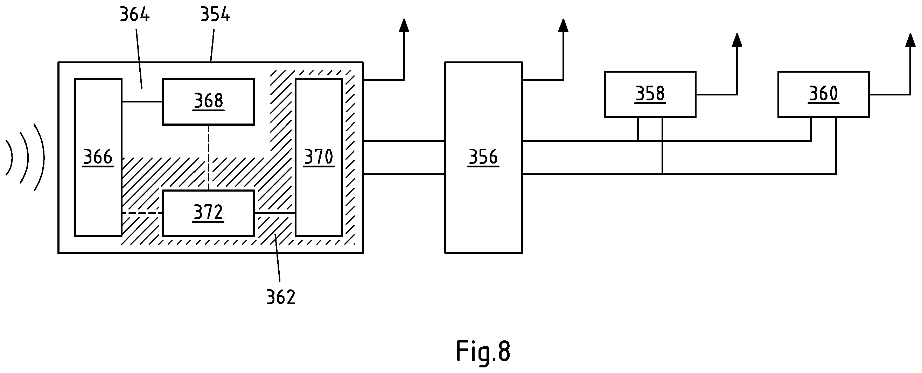

Fig. 8 zeigt ein vereinfachtes Blockdiagramm für Bauteile des Aufnahmegefäßes des Küchengeräts aus der Fig. 5 oder aus der Fig. 7, die an einer Signalübertragung beteiligt sind. Ein Transceiver 354, ein Mikroprozessor 356 und Sensoren 358, 360 sind mit Blöcken schematisch dargestellt. Der Transceiver 354 weist einen aktiven Teil 362 (nicht schraffiert) und einen passiven Teil 364 (schraffierter Bereich samt in diesem Bereich angeordneten Bauteilen) auf.

Der passive Teil 364 weist wiederum ein Nahfeldkommunikationselement 366 und einen nicht-flüchtigen Datenspeicher 368 bzw. sogenannter "EEPROM" auf. Auf dem Datenspeicher 368 sind Unique Identifiers, Konfigurationsdaten und / oder weitere Informationen gespeichert. Das Nahfeldkommunikationselement 366 ist zur Kommunikation entsprechend des Standards "NFC Forum Type 2 Tag" eingerichtet und erfordert keine gesonderte externe Versorgungsspannung.

Der aktive Teil 362 weist eine sogenannte "I²C-Interface" 370 und einen flüchtigen Datenspeicher 372 ("SRAM") auf. Der Datenspeicher 372 kann über die I²C-Interface 370 überschrieben werden, wobei eine extern erzeugte Versorgungsspannung erforderlich ist. Diese Versorgung erfolgt im Rahmen der Erfindung durch das Stromversorgungsteil der ersten Antennenvorrichtung des Aufnahmegefäßes, beispielsweise wie beim Ausführungsbeispiel aus der Fig. 2.

Ein Überschreiben des flüchtigen Datenspeicher 372 ("SRAM") via das Nahfeldkommunikationselement 366 kann in zwei Varianten erfolgen.

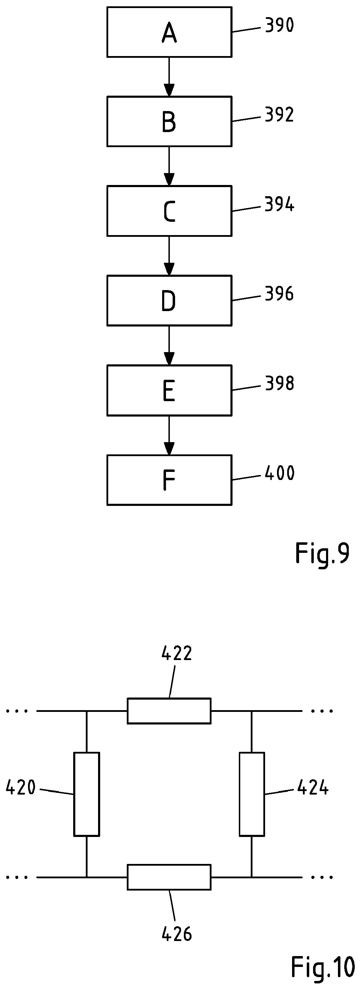

Fig. 9 zeigt ein Flussdiagramm für ein Verfahren zum Betreiben eines Küchengeräts.

In einem ersten Verfahrensschritt A 390 wird ein Grundgerät mit einem ersten, zur kabellosen Kommunikation eingerichteten Kommunikationsmodul bereitgestellt.

Gleichzeitig oder im Anschluss wird in einem Schritt B 392 ein Aufnahmegefäß mit einem Bauteil und mit einer ersten, am Bauteil angeordneten und zur kabellosen Kommunikation eingerichteten Antennenvorrichtung bereitgestellt.

Beim Schritt C 394 werden das Kommunikationsmodul des Grundgeräts und die erste Antennenvorrichtung des Aufnahmegefäßes in gegenseitiger Reichweite angeordnet.

Anschließend und im Schritt D 396 wird ein Signal vom ersten Kommunikationsmodul des Grundgeräts an die erste Antennenvorrichtung des Aufnahmegefäßes übertragen, und dann im Schritt E 398 wird durch die erste Antennenvorrichtung des Aufnahmegefäßes aus dem übertragenen Signal Strom erzeugt.

Im Schritt F 400 wird mit dem erzeugten Strom ein aktives Teil der ersten Antennenvorrichtung des Aufnahmegefäßes versorgt.

Als alternativer oder zusätzlicher Verfahrensschritt kann ein weiteres Signal vom ersten Kommunikationsmodul des Grundgeräts an die erste Antennenvorrichtung des Aufnahmegefäßes übertragen werden und mindestens eine Information aus dem empfangenen Signal zur Datenkommunikation extrahiert werden.

Fig. 10 zeigt ein Blockdiagramm für ein Anpassungsnetzwerk, wobei vier Impedanzen 420, 422, 424 und 426 dargestellt sind. Diese Impedanz stellen das Verhalten von elektronischen Komponenten eines Anpassungsnetzwerkes für ein Aufnahmegefäße bzw. für ein Küchengerät dar, wobei die Impedanzwerte in Abhängigkeit von den Eigenschaften der zugeordneten Antennenvorrichtung bzw. Antennenelement ausgewählt sind.

## Patentansprüche

1. Aufnahmegefäß (2, 84, 146, 206, 324) für ein Küchengerät (80, 200, 320)
- mit einer einen Aufnahmeraum (8, 104, 222) bildenden Wandung (4, 94) und
- mit einem an der Wandung (4, 94) angebrachten Bauteil (6, 96, 144, 204),
- wobei eine erste Antennenvorrichtung (18, 108, 160, 256) zur kabellosen Kommunikation am Bauteil (6, 96, 144, 204) angeordnet ist,
- wobei eine zweite Antennenvorrichtung (20, 110, 174, 272) zur kabellosen Kommunikation am Bauteil (6, 96, 144, 204) angeordnet ist,
- wobei ein erstes Anpassungsnetzwerk (24, 30, 52, 117, 162, 172, 258, 270) am Bauteil (6, 96, 144, 204) angeordnet ist,
- wobei das erste Anpassungsnetzwerk (24, 30, 52, 117, 162, 172, 258, 270) mit der ersten Antennenvorrichtung (18, 108, 160, 256) und mit der zweiten Antennenvorrichtung (20, 110, 174, 272) verbunden ist, und
- wobei das erste Anpassungsnetzwerk (24, 30, 52, 117, 162, 172, 258, 270) zur Anpassung von Eigenschaften der ersten Antennenvorrichtung (18, 108, 160, 256) und / oder der zweiten Antennenvorrichtung (20, 110, 174, 272) zum Übermitteln eines Signals eingerichtet ist,
**dadurch gekennzeichnet,**
- **dass** ein zweites Anpassungsnetzwerk (24, 162, 258) und ein Stromversorgungsteil (28, 50, 128, 164, 260, 340) vorgesehen sind,
- **dass** das zweite Anpassungsnetzwerk (24, 162, 258, 270) dazu eingerichtet ist, Eigenschaften eines durch das erste Antennenvorrichtung (18, 108, 160, 256) empfangenen Signals für eine Weiterbehandlung durch das Stromversorgungsteil (28, 50, 128, 164, 260, 340) einzustellen, und
- **dass** das Stromversorgungsteil (28, 50, 128, 164, 260, 340) dazu eingerichtet ist, aus dem durch das erste Antennenvorrichtung (18, 108, 160, 256) kabellos empfangenen Signal mit angepassten Eigenschaften Strom zu erzeugen.

2. Aufnahmegefäß (2, 84, 146, 206, 324) nach Anspruch 1,
**dadurch gekennzeichnet,**
- **dass** die erste Antennenvorrichtung (18, 108, 160, 256) einen Nahfeldkommunikation-Transceiver (26, 166, 262, 354) aufweist, und
- **dass** die zweite Antennenvorrichtung (20, 110, 174, 272) einen passiven Nahfeldkommunikation-Transmitter (32) aufweist.

3. Aufnahmegefäß (2, 84, 146, 206, 324) nach Anspruch 1 oder 2,
**dadurch gekennzeichnet,**
- **dass** das erste Anpassungsnetzwerk (24, 30, 52, 117, 162, 172, 258, 270) zur Anpassung von Eigenschaften eines durch die zweite Antennenvorrichtung (20, 110, 174, 272) empfangenen Signals an die Eigenschaften der ersten Antennenvorrichtung (18, 108, 160, 256) eingerichtet ist.

4. Aufnahmegefäß (2, 84, 146, 206, 324) nach einem der Ansprüche 1 bis 3,
**dadurch gekennzeichnet,**
- **dass** ein Transceiver (26, 166, 262, 354) und ein Mikroprozessor (27, 129, 168, 264, 356) vorgesehen sind,
- wobei der Transceiver (26, 166, 262, 354) mit dem zweiten Anpassungsnetzwerk (24, 162, 258) und mit dem Mikroprozessor (27, 129, 168, 264, 356) verbunden ist,
- **dass** das zweite Anpassungsnetzwerk (24, 162, 258) dazu eingerichtet ist, Eigenschaften eines durch die erste Antennenvorrichtung (18, 108, 160, 256) empfangenen Signals für eine Weiterbehandlung durch den Transceiver (26, 166, 262, 354) anzupassen, und dass der Transceiver (26, 166, 262, 354) dazu eingerichtet ist, das Signal zur Weiterbehandlung durch den Mikroprozessor (27, 129, 168, 264, 356) anzupassen, und
- **dass** der Transceiver (26, 166, 262, 354) dazu eingerichtet ist, ein durch den Mikroprozessor (27, 129, 168, 264, 356) ausgegebene Signal zur Weiterbehandlung durch den Transceiver (26, 166, 262, 354) anzupassen, und wobei das zweite Anpassungsnetzwerk (24, 162, 258) dazu eingerichtet ist, das durch den Mikroprozessor (27, 129, 168, 264, 356) angepasste Signal des Mikroprozessors (27, 129, 168, 264, 356) für ein Senden durch die ersten Antennenvorrichtung (18, 108, 160, 256) anzupassen.

5. Aufnahmegefäß (2, 84, 146, 206, 324) nach einem der Ansprüche 1 bis 3,
**dadurch gekennzeichnet,**
- **dass** das Stromversorgungsteil (28, 50, 128, 164, 260, 340) mit dem Mikroprozessor (27, 129, 168, 264, 356) verbunden ist und zur Stromversorgung des Mikroprozessors (27, 129, 168, 264, 356) eingerichtet ist, und / oder
- **dass** das Stromversorgungsteil (28, 50, 128, 164, 260, 340) mit dem Transceiver (26, 166, 262, 354) verbunden ist und zur Stromversorgung des Transceivers (26, 166, 262, 354) eingerichtet ist.

6. Aufnahmegefäß (2, 84, 146, 206, 324) nach einem der Ansprüche 1 bis 5,
**dadurch gekennzeichnet,**
- **dass** das Aufnahmegefäß (2, 84, 146, 206, 324) einen Verbindungsabschnitt (14, 92) aufweist, der zur mechanischen Verbindung mit einem Grundgerät (82, 142, 202, 322) des Küchengeräts (80, 200, 320) ausgebildet ist, und
- **dass** die erste Antennenvorrichtung (18, 108, 160, 256) an einem Abschnitt (34) des Bauteils (6, 96, 144, 204) angeordnet ist, der dem Verbindungsabschnitt (14, 92) am nächsten angeordnet ist.

7. Aufnahmegefäß (2, 84, 146, 206, 324) nach einem der Ansprüche 1 bis 6,
**dadurch gekennzeichnet,**
- **dass** die Wandung (4, 94) eine nach oben gerichtete Öffnung (10, 102, 334) aufweist, so dass der durch die Wandung (4, 94) gebildete Aufnahmeraum (8, 104, 222) nach oben offen ist, und
- **dass** die zweite Antennenvorrichtung (20, 110, 174, 272) an einem Abschnitt (36) des Bauteils (6, 96, 144, 204) angeordnet ist, der der nach oben gerichteten Öffnung (10, 102, 334) der Wandung (4, 94) am nächsten angeordnet ist.

8. Aufnahmegefäß (2, 84, 146, 206, 324) nach einem der Ansprüche 1 bis 7,
**dadurch gekennzeichnet,**
- **dass** das Bauteil (6, 96, 144, 204) im Wesentlichen aus einem für elektromagnetischen Wellen zumindest teilweise durchlässigen Material ausgebildet ist, und
- **dass** die erste Antennenvorrichtung (18, 108, 160, 256) und die zweite Antennenvorrichtung (20, 110, 174, 272) im Bauteil (6, 96, 144, 204) integriert sind.

9. Aufnahmegefäß (2, 84, 146, 206, 324) nach einem der Ansprüche 1 bis 8,
**dadurch gekennzeichnet,**
- **dass** das Bauteil (6, 96, 144, 204) als Griffelement, als Isolierungselement, als abnehmbares Zubehörteil, als Zusatzbauteil oder als eine Kombination hiervon ausgebildet ist.

10. Küchengerät (80, 200, 320)
- mit einem Grundgerät (82, 142, 202, 322) und
- mit einem Aufnahmegefäß (2, 84, 146, 206, 324) nach einem der Ansprüche 1 bis 9,
- wobei das Aufnahmegefäß (2, 84, 146, 206, 324) eine Wandung (4, 94) und ein Bauteil (6, 96, 144, 204) aufweist,
**dadurch gekennzeichnet,**
- **dass** ein erstes Kommunikationsmodul (106, 150, 228) am Grundgerät (82, 142, 202, 322) vorgesehen ist,
- **dass** eine erste Antennenvorrichtung (18, 108, 160, 256) und eine zweite Antennenvorrichtung (20, 110, 174, 272) am Bauteil (6, 96, 144, 204) des Aufnahmegefäßes (2, 84, 146, 206, 324) angeordnet sind,
- wobei die erste Antennenvorrichtung (18, 108, 160, 256) und die zweite Antennenvorrichtung (20, 110, 174, 272) kabelverbunden sind, und
- **dass** das erste Kommunikationsmodul (106, 150, 228) des Grundgeräts (82, 142, 202, 322) und die erste Antennenvorrichtung (18, 108, 160, 256) des Aufnahmegefäßes (2, 84, 146, 206, 324) zur kabellosen Kommunikation miteinander eingerichtet sind.

11. Küchengerät (80, 200, 320) nach Anspruch 10,
**dadurch gekennzeichnet,**
- **dass** ein erstes Zubehörteil (86, 148, 208, 326) mit einer ersten Kommunikationseinheit (112, 176, 274) vorgesehen ist, und
- **dass** die zweite Antennenvorrichtung (20, 110, 174, 272) des Aufnahmegefäßes (2, 84, 146, 206, 324) und die erste Kommunikationseinheit (112, 176, 274) des ersten Zubehörteils (86, 148, 208, 326) zur drahtlosen Kommunikation eingerichtet sind.

12. Küchengerät (80, 200, 320) nach Anspruch 11,
**dadurch gekennzeichnet,**
- **dass** das erste Zubehörteil (86, 148, 208, 326) eine zweite Kommunikationseinheit (114, 178, 276) und ein Anpassungsnetzwerk (aufweist,
- wobei die erste Kommunikationseinheit (112, 176, 274), das Anpassungsnetzwerk und die zweite Kommunikationseinheit (114, 178, 276) kabelverbunden sind,
- **dass** das Anpassungsnetzwerk des ersten Zubehörteils (86, 148, 208, 326) dazu eingerichtet ist, ein durch die zweite Kommunikationseinheit (114, 178, 276) empfangene Signal an Eigenschaften der ersten Kommunikationseinheit (112, 176, 274) anzupassen,
- **dass** ein zum Einsatz im Aufnahmeraum (8, 104, 222) des Aufnahmegefäßes (2, 84, 146, 206, 324) vorgesehenen, zweites Zubehörteil (130, 182, 224, 240, 328) mit einem Kommunikationsmittel vorgesehen ist, und
- **dass** die zweite Kommunikationseinheit (114, 178, 276) des ersten Zubehörteils (86, 148, 208, 326) dazu eingerichtet ist, mit einem Kommunikationsmittel (220) des zweiten Zubehörteils (130, 182, 224, 240, 328) kabellos zu kommunizieren.

13. Küchengerät (80, 200, 320) nach einem der Ansprüche 10 bis 12,
**dadurch gekennzeichnet,**
- **dass** ein zur Anordnung in einer durchdringenden Öffnung (212) der Wandung (4, 94) des Aufnahmegefäßes (2, 84, 146, 206, 324) ausgebildetes Verbindungselement (210) vorgesehen ist,
- **dass** das Verbindungselement (210) ein erstes Kommunikationsmittel (214, 284) und ein zweites Kommunikationsmittel (216, 288) aufweist, die miteinander kabelverbunden sind,
- **dass** ein zweites Kommunikationsmodul (218, 254) am Grundgerät (82, 142, 202, 322) vorgesehen ist, und
- **dass** das zweite Kommunikationsmodul (218, 254) des Grundgeräts (82, 142, 202, 322) und das erste Kommunikationsmittel (214, 284) des Verbindungselements (210) zur kabellosen Kommunikation miteinander eingerichtet sind, und
- **dass** das zweite Kommunikationsmittel (216, 288) des Verbindungselements (210) zur kabellosen Kommunikation, insbesondere zur kabellosen Kommunikation mit einem Kommunikationsmittel (220) eines zum Einsatz im Aufnahmeraum (8, 104, 222) des Aufnahmegefäßes (2, 84, 146, 206, 324) vorgesehenen Zubehörteils (130, 182, 224, 240, 328) eingerichtet ist.

14. Küchengerät (80, 200, 320) nach Anspruch 13,
**dadurch gekennzeichnet,**
- **dass** eine Steuereinrichtung (226) mit einem ersten Betriebsmodus, mit einem zweiten Betriebsmodus und mit einem dritten Betriebsmodus vorgesehen ist,
- wobei im ersten Betriebsmodus die Steuereinrichtung (226) Signale aus dem ersten Kommunikationsmodul (106, 150, 228) auswertet,
- wobei im zweiten Betriebsmodus die Steuereinrichtung (226) Signale aus dem zweiten Kommunikationsmodul (218, 254) auswertet, und
- wobei im dritten Betriebsmodus die Steuereinrichtung (226) Signale aus dem ersten Kommunikationsmodul (106, 150, 228) und Signale aus dem zweiten Kommunikationsmodul (218, 254) zusammen auswertet.

15. Verfahren zum Betreiben eines Küchengeräts (80, 200, 320) nach einem der Ansprüche 10 bis 13,
- bei dem ein Grundgerät (82, 142, 202, 322) mit einem ersten, zur kabellosen Kommunikation eingerichteten Kommunikationsmodul (106, 150, 228) bereitgestellt wird,
- bei dem ein Aufnahmegefäß (2, 84, 146, 206, 324) mit einem Bauteil (6, 96, 144, 204), mit einer ersten Antennenvorrichtung (18, 108, 160, 256), mit einer zweiten Antennenvorrichtung (20, 110, 174, 272) und mit einem Anpassungsnetzwerk (24, 30, 52, 117, 162, 172, 258, 270) bereitgestellt wird,
- wobei die erste Antennenvorrichtung (18, 108, 160, 256), die zweite Antennenvorrichtung (20, 110, 174, 272) und das Anpassungsnetzwerk (24, 30, 52, 117, 162, 172, 258, 270) am Bauteil (6, 96, 144, 204) angeordnet sind,
- bei dem das erste Kommunikationsmodul (106, 150, 228) des Grundgeräts (82, 142, 202, 322) und die erste Antennenvorrichtung (18, 108, 160, 256) des Aufnahmegefäßes (2, 84, 146, 206, 324) in gegenseitiger Reichweite angeordnet werden,
- bei dem ein Signal durch die zweite Antennenvorrichtung (20, 110, 174, 272) empfangen und an das Anpassungsnetzwerk (24, 30, 52, 117, 162, 172, 258, 270) weitergeleitet wird,
- bei dem Eigenschaften des Signals durch das Anpassungsnetzwerk (24, 30, 52, 117, 162, 172, 258, 270) an die Eigenschaften der ersten Antennenvorrichtung (18, 108, 160, 256) angepasst werden, und
- bei dem das Signal mit angepassten Eigenschaften durch die erste Antennenvorrichtung (18, 108, 160, 256) an das erste Kommunikationsmodul (106, 150, 228) des Grundgeräts (82, 142, 202, 322) kabellos übertragen wird.

16. Verfahren nach Anspruch 15,
- bei dem ein Signal vom ersten Kommunikationsmodul (106, 150, 228) des Grundgeräts (82, 142, 202, 322) an die erste Antennenvorrichtung (18, 108, 160, 256) des Aufnahmegefäßes (2, 84, 146, 206, 324) kabellos übertragen wird,
- bei dem Strom durch ein Stromversorgungsteil (28, 50, 128, 164, 260, 340) der ersten Antennenvorrichtung (18, 108, 160, 256) aus dem übertragenen Signal erzeugt wird, und
- bei dem ein Transceiver (26, 166, 262, 354) und / oder ein Mikroprozessor (27, 129, 168, 264, 356) des Aufnahmegefäßes (2, 84, 146, 206, 324) mit dem erzeugten Strom versorgt wird.

17. Verfahren nach Anspruch 15 oder 16,
- bei dem ein Signal durch das erste Kommunikationsmodul (106, 150, 228) des Grundgeräts (82, 142, 202, 322) empfangen wird,
und / oder
- bei dem ein Signal durch ein zweites, am Grundgerät (82, 142, 202, 322) vorgesehenes und zur kabellosen Kommunikation eingerichtetes Kommunikationsmodul (218, 254) empfangen wird, und
- bei dem eine Steuereinrichtung (226) des Grundgeräts (82, 142, 202, 322) in einem ersten Betriebsmodus, bei dem das durch das erste Kommunikationsmodul (106, 150, 228) empfangene Signal ausgewertet wird, in einem zweiten Betriebsmodus, bei dem das durch das zweite Kommunikationsmodul (106, 150, 228) empfangene Signal ausgewertet wird, oder in einem dritten Betriebsmodus, bei dem das durch das erste Kommunikationsmodul (106, 150, 228) empfangene Signal und das durch das zweite Kommunikationsmodul (106, 150, 228) empfangene Signal ausgewertet werden, betrieben wird.

## Claims

1. Receiving vessel (2, 84, 146, 206, 324) for a kitchen appliance (80, 200, 320)
- with a wall (4, 94) forming a receiving space (8, 104, 222) and
- with a component (6, 96, 144, 204) attached to the wall (4, 94),
- wherein a first antenna (18, 108, 160, 256) for wireless communication is arranged at the component (6, 96, 144, 204),
- wherein a second antenna (20, 110, 174, 272) for wireless communication is arranged at the component (6, 96, 144, 204),
- wherein a first adapting network (24, 30, 52, 117, 162, 172, 258, 270) is arranged at the component (6, 96, 144, 204),
- wherein the first adapting network (24, 30, 52, 117, 162, 172, 258, 270) is connected to the first antenna (18, 108, 160, 256) and to the second antenna (20, 110, 174, 272), and
- wherein the first adapting network (24, 30, 52, 117, 162, 172, 258, 270) is configured to adapt characteristics of the first antenna (18, 108, 160, 256) and/or the second antenna (20, 110, 174, 272) for transmitting a signal,
**characterised**
- **in that** a second adapting network (24, 162, 258) and a power supply (28, 50, 128, 164, 260, 340) are provided,
- **in that** the second adapting network (24, 162, 258, 270) is configured to adjust characteristics of a signal received by the first antenna (18, 108, 160, 256) for further processing by the power supply (28, 50, 128, 164, 260, 340), and
- **in that** the power supply (28, 50, 128, 164, 260, 340) is configured to generate power with adapted characteristics from the signal received wirelessly by the first antenna (18, 108, 160, 256).

2. Receiving vessel (2, 84, 146, 206, 324) according to claim 1,
**characterised**
- **in that** the first antenna (18, 108, 160, 256) comprises a near field communication transceiver (26, 166, 262, 354), and
- **in that** the second antenna (20, 110, 174, 272) comprises a passive near-field communication transmitter (32).

3. Receiving vessel (2, 84, 146, 206, 324) according to claim 1 or 2,
**characterised**
- **in that** the first adapting network (24, 30, 52, 117, 162, 172, 258, 270) is configured to adapt characteristics of a signal received by the second antenna (20, 110, 174, 272) to the characteristics of the first antenna (18, 108, 160, 256).

4. Receiving vessel (2, 84, 146, 206, 324) according to any one of claims 1 to 3,
**characterised**
- **in that** a transceiver (26, 166, 262, 354) and a microprocessor (27, 129, 168, 264, 356) are provided,
- wherein the transceiver (26, 166, 262, 354) is connected to the second adapting network (24, 162, 258) and to the microprocessor (27, 129, 168, 264, 356),
- **in that** the second adapting network (24, 162, 258) is configured to adapt characteristics of a signal received by the first antenna (18, 108, 160, 256) for further processing by the transceiver (26, 166, 262, 354), and in that the transceiver (26, 166, 262, 354) is configured to adapt the signal for further processing by the microprocessor (27, 129, 168, 264, 356), and
- **in that** the transceiver (26, 166, 262, 354) is configured to adapt a signal output by the microprocessor (27, 129, 168, 264, 356) for further processing by the transceiver (26, 166, 262, 354), and wherein the second adapting network (24, 162, 258) is configured to adapt the signal from the microprocessor (27, 129, 168, 264, 356) adapted by the microprocessor (27, 129, 168, 264, 356) for transmission by the first antenna (18, 108, 160, 256).

5. Receiving vessel (2, 84, 146, 206, 324) according to any one of claims 1 to 3,
**characterised**
- **in that** the power supply (28, 50, 128, 164, 260, 340) is connected to the microprocessor (27, 129, 168, 264, 356) and is configured to supply power to the microprocessor (27, 129, 168, 264, 356),
and / or
- **in that** the power supply (28, 50, 128, 164, 260, 340) is connected to the transceiver (26, 166, 262, 354) and is configured to supply power to the transceiver (26, 166, 262, 354).

6. Receiving vessel (2, 84, 146, 206, 324) according to any one of claims 1 to 5,
**characterised**
- **in that** the receiving vessel (2, 84, 146, 206, 324) has a connecting portion (14, 92) which is designed for mechanical connection to a base appliance (82, 142, 202, 322) of the kitchen appliance (80, 200, 320), and
- **in that** the first antenna (18, 108, 160, 256) is arranged at a portion (34) of the component (6, 96, 144, 204) which is arranged closest to the connecting portion (14, 92).

7. Receiving vessel (2, 84, 146, 206, 324) according to any one of claims 1 to 6,
**characterised**
- **in that** the wall (4, 94) has an upwardly directed opening (10, 102, 334), so that the receiving space (8, 104, 222) formed by the wall (4, 94) is open at the top, and
- **in that** the second antenna (20, 110, 174, 272) is arranged at a portion (36) of the component (6, 96, 144, 204) which is arranged closest to the upwardly directed opening (10, 102, 334) of the wall (4, 94).

8. Receiving vessel (2, 84, 146, 206, 324) according to any one of claims 1 to 7,
**characterised**
- **in that** the component (6, 96, 144, 204) is essentially formed from a material which is at least partially permeable to electromagnetic waves, and
- **in that** the first antenna (18, 108, 160, 256) and the second antenna (20, 110, 174, 272) are integrated in the component (6, 96, 144, 204).

9. Receiving vessel (2, 84, 146, 206, 324) according to any one of claims 1 to 8,
**characterised**
- **in that** the component (6, 96, 144, 204) is designed as a handle element, an insulating element, a removable accessory, an additional component or a combination thereof.

10. Kitchen appliance (80, 200, 320)
- with a base appliance (82, 142, 202, 322) and
- with a receiving vessel (2, 84, 146, 206, 324) according to one of claims 1 to 9,
- wherein the receiving vessel (2, 84, 146, 206, 324) has a wall (4, 94) and a component (6, 96, 144, 204),
**characterised**
- **in that** a first communication module (106, 150, 228) is provided at the base appliance (82, 142, 202, 322),
- **in that** a first antenna (18, 108, 160, 256) and a second antenna (20, 110, 174, 272) are arranged at the component (6, 96, 144, 204) of the receiving vessel (2, 84, 146, 206, 324),
wherein the first antenna (18, 108, 160, 256) and the second antenna (20, 110, 174, 272) are connected by cable, and
- **in that** the first communication module (106, 150, 228) of the base appliance (82, 142, 202, 322) and the first antenna (18, 108, 160, 256) of the receiving vessel (2, 84, 146, 206, 324) are configured for wireless communication with each other.

11. Kitchen appliance (80, 200, 320) according to claim 10,
**characterised**
- **in that** a first accessory (86, 148, 208, 326) with a first communication unit (112, 176, 274) is provided, and
- **in that** the second antenna (20, 110, 174, 272) of the receiving vessel (2, 84, 146, 206, 324) and the first communication unit (112, 176, 274) of the first accessory (86, 148, 208, 326) are configured for wireless communication.

12. Kitchen appliance (80, 200, 320) according to claim 11,
**characterised**
- **in that** the first accessory (86, 148, 208, 326) comprises a second communication unit (114, 178, 276) and an adapting network (86, 148, 208, 326),
- wherein the first communication unit (112, 176, 274), the adapting network and the second communication unit (114, 178, 276) are connected by cable,
- **in that** the adapting network of the first accessory (86, 148, 208, 326) is configured to adapt a signal received by the second communication unit (114, 178, 276) to characteristics of the first communication unit (112, 176, 274),
- **in that** a second accessory (130, 182, 224, 240, 328) with a communication part is provided for use in the receiving space (8, 104, 222) of the receiving vessel (2, 84, 146, 206, 324), and
- **in that** the second communication unit (114, 178, 276) of the first accessory (86, 148, 208, 326) is configured to communicate wirelessly with a communication part (220) of the second accessory (130, 182, 224, 240, 328).

13. Kitchen appliance (80, 200, 320) according to any one of claims 10 to 12,
**characterised**
- **in that** a connecting element (210) designed for arrangement in a penetrating opening (212) of the wall (4, 94) of the receiving vessel (2, 84, 146, 206, 324) is provided,
- **in that** the connecting element (210) has a first communication part (214, 284) and a second communication part (216, 288) which are connected to one another by cable,
- **in that** a second communication module (218, 254) is provided at the base appliance (82, 142, 202, 322), and
- **in that** the second communication module (218, 254) of the base appliance (82, 142, 202, 322) and the first communication part (214, 284) of the connecting element (210) are configured for wireless communication with each other, and
- **in that** the second communication part (216, 288) of the connecting element (210) is configured for wireless communication, in particular for wireless communication with a communication part (220) of an accessory (130, 182, 224, 240, 328) intended for use in the receiving space (8, 104, 222) of the receiving vessel (2, 84, 146, 206, 324).

14. Kitchen appliance (80, 200, 320) according to claim 13,
**characterised**
- **in that** a controller (226) with a first operating mode, with a second operating mode and with a third operating mode is provided,
- wherein, in the first operating mode, the controller (226) analyses signals from the first communication module (106, 150, 228),
- wherein, in the second operating mode, the controller (226) analyses signals from the second communication module (218, 254), and
- wherein, in the third operating mode, the controller (226) analyses signals from the first communication module (106, 150, 228) and signals from the second communication module (218, 254) together.

15. Method for operating a kitchen appliance (80, 200, 320) according to any one of claims 10 to 13,
- wherein a base appliance (82, 142, 202, 322) is provided with a first communication module (106, 150, 228) configured for wireless communication,
- wherein a receiving vessel (2, 84, 146, 206, 324) is provided with a component (6, 96, 144, 204), with a first antenna (18, 108, 160, 256), with a second antenna (20, 110, 174, 272) and with an adapting network (24, 30, 52, 117, 162, 172, 258, 270),
- wherein the first antenna (18, 108, 160, 256), the second antenna (20, 110, 174, 272) and the adapting network (24, 30, 52, 117, 162, 172, 258, 270) are arranged at the component (6, 96, 144, 204),
- wherein the first communication module (106, 150, 228) of the base appliance (82, 142, 202, 322) and the first antenna (18, 108, 160, 256) of the receiving vessel (2, 84, 146, 206, 324) are arranged in mutual range,
- wherein a signal is received by the second antenna (20, 110, 174, 272) and forwarded to the adapting network (24, 30, 52, 117, 162, 172, 258, 270),
- in which characteristics of the signal are adapted by the adapting network (24, 30, 52, 117, 162, 172, 258, 270) to the characteristics of the first antenna (18, 108, 160, 256), and
- wherein the signal with adapted characteristics is transmitted wirelessly by the first antenna (18, 108, 160, 256) to the first communication module (106, 150, 228) of the base appliance (82, 142, 202, 322).

16. Method according to claim 15,
- wherein a signal is transmitted wirelessly from the first communication module (106, 150, 228) of the base appliance (82, 142, 202, 322) to the first antenna (18, 108, 160, 256) of the receiving vessel (2, 84, 146, 206, 324),
- wherein current is generated by a power supply (28, 50, 128, 164, 260, 340) of the first antenna (18, 108, 160, 256) from the transmitted signal, and
- wherein a transceiver (26, 166, 262, 354) and/or a microprocessor (27, 129, 168, 264, 356) of the receiving vessel (2, 84, 146, 206, 324) is supplied with the generated current.

17. Method according to claim 15 or 16,
- wherein a signal is received by the first communication module (106, 150, 228) of the base appliance (82, 142, 202, 322),
and / or
- wherein a signal is received by a second communication module (218, 254) provided on the base appliance (82, 142, 202, 322) and configured for wireless communication, and
- wherein a controller (226) of the base appliance (82, 142, 202, 322) is operated in a first operating mode, in which the signal received by the first communication module (106, 150, 228) is analysed, in a second operating mode, in which the signal received by the second communication module (106, 150, 228) is analysed, or in a third operating mode, in which the signal received by the first communication module (106, 150, 228) and the signal received by the second communication module (106, 150, 228) are analysed.

## Revendications

1. Récipient (2, 84, 146, 206, 324) pour un appareil de cuisine (80, 200, 320)
- avec une paroi (4, 94) formant un espace de réception (8, 104, 222) et
- avec un composant (6, 96, 144, 204) fixé à la paroi (4, 94),
- où un premier dispositif d'antenne (18, 108, 160, 256) pour une communication sans fil est disposé au composant (6, 96, 144, 204),
- où un deuxième dispositif d'antenne (20, 110, 174, 272) pour une communication sans fil est disposé au composant (6, 96, 144, 204),
- où un premier réseau d'adaptation (24, 30, 52, 117, 162, 172, 258, 270) est disposé au composant (6, 96, 144, 204),
- où le premier réseau d'adaptation (24, 30, 52, 117, 162, 172, 258, 270) est connecté au premier dispositif d'antenne (18, 108, 160, 256) et au deuxième dispositif d'antenne (20, 110, 174, 272), et
- où le premier réseau d'adaptation (24, 30, 52, 117, 162, 172, 258, 270) est configuré pour adapter des propriétés du premier dispositif d'antenne (18, 108, 160, 256) et/ou du deuxième dispositif d'antenne (20, 110, 174, 272) pour transmettre un signal,
**caractérisé en ce,**
- **qu'**un deuxième réseau d'adaptation (24, 162, 258) et une unité d'alimentation (28, 50, 128, 164, 260, 340) sont prévus,
- **que** le deuxième réseau d'adaptation (24, 162, 258, 270) est configuré pour régler les propriétés d'un signal reçu par le premier dispositif d'antenne (18, 108, 160, 256) pour un traitement ultérieur par l'unité d'alimentation (28, 50, 128, 164, 260, 340), et
- **que** l'unité d'alimentation (28, 50, 128, 164, 260, 340) est configurée pour générer un courant à partir du signal reçu sans fil avec des propriétés adaptées par le premier dispositif d'antenne (18, 108, 160, 256).

2. Récipient (2, 84, 146, 206, 324) selon la revendication 1,
**caractérisé en ce,**
- **que** le premier dispositif d'antenne (18, 108, 160, 256) a un émetteur-récepteur NFC (26, 166, 262, 354), et
- **que** le deuxième dispositif d'antenne (20, 110, 174, 272) a un émetteur NFC passif (32).

3. Récipient (2, 84, 146, 206, 324) selon la revendication 1 ou 2,
**caractérisé en ce,**
- **que** le premier réseau d'adaptation (24, 30, 52, 117, 162, 172, 258, 270) est configuré pour adapter les propriétés d'un signal reçu par le deuxième dispositif d'antenne (20, 110, 174, 272) aux propriétés du premier dispositif d'antenne (18, 108, 160, 256).

4. Récipient (2, 84, 146, 206, 324) selon l'une des revendications 1 à 3,
**caractérisé en ce,**
- **que** un émetteur-récepteur (26, 166, 262, 354) et un microprocesseur (27, 129, 168, 264, 356) sont prévus,
- où l'émetteur-récepteur (26, 166, 262, 354) est connecté au deuxième réseau d'adaptation (24, 162, 258) et au microprocesseur (27, 129, 168, 264, 356),
- **que** le deuxième réseau d'adaptation (24, 162, 258) est configuré pour adapter les propriétés d'un signal reçu par le premier dispositif d'antenne (18, 108, 160, 256) pour un traitement ultérieur par l'émetteur-récepteur (26, 166, 262, 354), et que l'émetteur-récepteur (26, 166, 262, 354) est configuré pour adapter le signal pour un traitement ultérieur par le microprocesseur (27, 129, 168, 264, 356), et
- **que** l'émetteur-récepteur (26, 166, 262, 354) est configuré pour adapter un signal émis par le microprocesseur (27, 129, 168, 264, 356) pour un traitement ultérieur par l'émetteur-récepteur (26, 166, 262, 354), et où le deuxième réseau d'adaptation (24, 162, 258) est configuré pour adapter le signal du microprocesseur (27, 129, 168, 264, 356) adapté par le microprocesseur (27, 129, 168, 264, 356) pour une transmission par le premier dispositif d'antenne (18, 108, 160, 256).

5. Récipient (2, 84, 146, 206, 324) selon l'une des revendications 1 à 3,
**caractérisé en ce,**
- **que** l'unité d'alimentation (28, 50, 128, 164, 260, 340) est connectée au microprocesseur (27, 129, 168, 264, 356) et est configurée pour alimenter le microprocesseur (27, 129, 168, 264, 356),
et/ou
- **que** l'unité d'alimentation (28, 50, 128, 164, 260, 340) est connectée à l'émetteur-récepteur (26, 166, 262, 354) et est configurée pour alimenter l'émetteur-récepteur (26, 166, 262, 354).

6. Récipient (2, 84, 146, 206, 324) selon l'une des revendications 1 à 5,
**caractérisé en ce,**
- **que** le récipient (2, 84, 146, 206, 324) a une section de connexion (14, 92) formée pour une connexion mécanique avec une unité de base (82, 142, 202, 322) de l'appareil de cuisine (80, 200, 320), et
- **que** le premier dispositif d'antenne (18, 108, 160, 256) est disposé à une portion (34) du composant (6, 96, 144, 204) qui est disposée la plus proche de la section de connexion (14, 92).

7. Récipient (2, 84, 146, 206, 324) selon l'une des revendications 1 à 6,
**caractérisé en ce,**
- **que** la paroi (4, 94) a une ouverture dirigée vers le haut (10, 102, 334), de sorte que l'espace de réception (8, 104, 222) formé par la paroi (4, 94) est ouvert vers le haut, et
- **que** le deuxième dispositif d'antenne (20, 110, 174, 272) est disposé à une portion (36) du composant (6, 96, 144, 204) qui est disposée la plus proche de l'ouverture dirigée vers le haut (10, 102, 334) de la paroi (4, 94).

8. Récipient (2, 84, 146, 206, 324) selon l'une des revendications 1 à 7,
**caractérisé en ce,**
- **que** le composant (6, 96, 144, 204) est essentiellement formé d'un matériau au moins partiellement transparent aux ondes électromagnétiques, et
- **que** le premier dispositif d'antenne (18, 108, 160, 256) et le deuxième dispositif d'antenne (20, 110, 174, 272) sont intégrés dans le composant (6, 96, 144, 204).

9. Récipient (2, 84, 146, 206, 324) selon l'une des revendications 1 à 8,
**caractérisé en ce,**
- **que** le composant (6, 96, 144, 204) est formé en tant qu'élément de poignée, en tant qu'élément d'isolation, en tant qu'accessoire amovible, en tant que composant supplémentaire ou en tant que combinaison de ceux-ci.

10. Appareil de cuisine (80, 200, 320)
- avec une unité de base (82, 142, 202, 322) et
- avec un récipient (2, 84, 146, 206, 324) selon l'une des revendications 1 à 9,
- où le récipient (2, 84, 146, 206, 324) a une paroi (4, 94) et un composant (6, 96, 144, 204),
**caractérisé en ce,**
- **que** un premier module de communication (106, 150, 228) est prévu à l'unité de base (82, 142, 202, 322),
- **que** un premier dispositif d'antenne (18, 108, 160, 256) et un deuxième dispositif d'antenne (20, 110, 174, 272) sont disposés au composant (6, 96, 144, 204) du récipient (2, 84, 146, 206, 324),
- où le premier dispositif d'antenne (18, 108, 160, 256) et le deuxième dispositif d'antenne (20, 110, 174, 272) sont connectés par câble, et
- **que** le premier module de communication (106, 150, 228) de l'unité de base (82, 142, 202, 322) et le premier dispositif d'antenne (18, 108, 160, 256) du récipient (2, 84, 146, 206, 324) sont configurés pour une communication sans fil l'un avec l'autre.

11. Appareil de cuisine (80, 200, 320) selon la revendication 10,
**caractérisé en ce,**
- **que** un premier accessoire (86, 148, 208, 326) avec une première unité de communication (112, 176, 274) est prévu, et
- **que** le deuxième dispositif d'antenne (20, 110, 174, 272) du récipient (2, 84, 146, 206, 324) et la première unité de communication (112, 176, 274) du premier accessoire (86, 148, 208, 326) sont configurés pour une communication sans fil.

12. Appareil de cuisine (80, 200, 320) selon la revendication 11,
**caractérisé en ce,**
- **que** le premier accessoire (86, 148, 208, 326) a une deuxième unité de communication (114, 178, 276) et un réseau d'adaptation (a,
- où la première unité de communication (112, 176, 274), le réseau d'adaptation et la deuxième unité de communication (114, 178, 276) sont connectés par câble,
- **que** le réseau d'adaptation du premier accessoire (86, 148, 208, 326) est configuré pour adapter un signal reçu par la deuxième unité de communication (114, 178, 276) aux propriétés de la première unité de communication (112, 176, 274),
- **qu'**un deuxième accessoire (130, 182, 224, 240, 328) prévu pour l'utilisation dans l'espace de réception (8, 104, 222) du récipient (2, 84, 146, 206, 324) avec un moyen de communication est prévu, et
- **que** la deuxième unité de communication (114, 178, 276) du premier accessoire (86, 148, 208, 326) est configurée pour communiquer sans fil avec un moyen de communication (220) du deuxième accessoire (130, 182, 224, 240, 328).

13. Appareil de cuisine (80, 200, 320) selon l'une des revendications 10 à 12,
**caractérisé en ce,**
- **qu'**un élément de connexion (210) formé pour être disposé dans une ouverture traversante (212) de la paroi (4, 94) du récipient (2, 84, 146, 206, 324) est prévu,
- **que** l'élément de connexion (210) a un premier moyen de communication (214, 284) et un deuxième moyen de communication (216, 288) qui sont connectés par câble l'un à l'autre,
- **qu'**un deuxième module de communication (218, 254) est prévu à l'unité de base (82, 142, 202, 322), et
- **que** le deuxième module de communication (218, 254) de l'unité de base (82, 142, 202, 322) et le premier moyen de communication (214, 284) de l'élément de connexion (210) sont configurés pour une communication sans fil l'un avec l'autre, et
- **que** le deuxième moyen de communication (216, 288) de l'élément de connexion (210) est configuré pour une communication sans fil, en particulier pour une communication sans fil avec un moyen de communication (220) d'un accessoire (130, 182, 224, 240, 328) prévu pour l'utilisation dans l'espace de réception (8, 104, 222) du récipient (2, 84, 146, 206, 324).

14. Appareil de cuisine (80, 200, 320) selon la revendication 13,
**caractérisé en ce,**
- **que** un dispositif de commande (226) avec un premier mode de fonctionnement, avec un deuxième mode de fonctionnement et avec un troisième mode de fonctionnement est prévu,
- où dans le premier mode de fonctionnement le dispositif de commande (226) évalue des signaux du premier module de communication (106, 150, 228),
- où dans le deuxième mode de fonctionnement le dispositif de commande (226) évalue des signaux du deuxième module de communication (218, 254), et
- où dans le troisième mode de fonctionnement le dispositif de commande (226) évalue ensemble des signaux du premier module de communication (106, 150, 228) et des signaux du deuxième module de communication (218, 254).

15. Méthode pour faire fonctionner un appareil de cuisine (80, 200, 320) selon l'une des revendications 10 à 13,
- dans laquelle une unité de base (82, 142, 202, 322) avec un premier module de communication (106, 150, 228) configuré pour une communication sans fil est fournie,
- dans laquelle un récipient (2, 84, 146, 206, 324) avec un composant (6, 96, 144, 204), avec un premier dispositif d'antenne (18, 108, 160, 256), avec un deuxième dispositif d'antenne (20, 110, 174, 272) et avec un réseau d'adaptation (24, 30, 52, 117, 162, 172, 258, 270) est fourni,
- où le premier dispositif d'antenne (18, 108, 160, 256), le deuxième dispositif d'antenne (20, 110, 174, 272) et le réseau d'adaptation (24, 30, 52, 117, 162, 172, 258, 270) sont disposés au niveau du composant (6, 96, 144, 204),
- dans laquelle le premier module de communication (106, 150, 228) de l'unité de base (82, 142, 202, 322) et le premier dispositif d'antenne (18, 108, 160, 256) du récipient (2, 84, 146, 206, 324) sont disposés dans une portée mutuelle,
- dans laquelle un signal est reçu par le deuxième dispositif d'antenne (20, 110, 174, 272) et transmis au réseau d'adaptation (24, 30, 52, 117, 162, 172, 258, 270),
- dans laquelle les propriétés du signal sont adaptées par le réseau d'adaptation (24, 30, 52, 117, 162, 172, 258, 270) aux propriétés du premier dispositif d'antenne (18, 108, 160, 256), et
- dans laquelle le signal avec des propriétés adaptées est transmis sans fil par le premier dispositif d'antenne (18, 108, 160, 256) au premier module de communication (106, 150, 228) de l'unité de base (82, 142, 202, 322).

16. Méthode selon la revendication 15,
- dans laquelle un signal est transmis sans fil du premier module de communication (106, 150, 228) de l'unité de base (82, 142, 202, 322) au premier dispositif d'antenne (18, 108, 160, 256) du récipient (2, 84, 146, 206, 324),
- dans laquelle un courant est généré à partir du signal transmis par une unité d'alimentation (28, 50, 128, 164, 260, 340) du premier dispositif d'antenne (18, 108, 160, 256), et
- dans laquelle un émetteur-récepteur (26, 166, 262, 354) et/ou un microprocesseur (27, 129, 168, 264, 356) du récipient (2, 84, 146, 206, 324) est alimenté avec le courant généré.

17. Méthode selon la revendication 15 ou 16,
- dans laquelle un signal est reçu par le premier module de communication (106, 150, 228) de l'unité de base (82, 142, 202, 322),
et/ou
- dans laquelle un signal est reçu par un deuxième module de communication (218, 254) prévu au niveau de l'unité de base (82, 142, 202, 322) et configuré pour une communication sans fil, et
- dans laquelle un dispositif de commande (226) de l'unité de base (82, 142, 202, 322) est exploité dans un premier mode de fonctionnement, où le signal reçu par le premier module de communication (106, 150, 228) est évalué, dans un deuxième mode de fonctionnement, où le signal reçu par le deuxième module de communication (106, 150, 228) est évalué, ou dans un troisième mode de fonctionnement, où le signal reçu par le premier module de communication (106, 150, 228) et le signal reçu par le deuxième module de communication (106, 150, 228) sont évalués.
